# EUROPEAN PATENT APPLICATION

(11) **EP 4 800 904 A1**
(43) Date of publication of application: **02.09.2026**
(21) Application number: 25160867.5
(22) Date of filing: 28.02.2025
(51) Int. Cl.: H02M 1/34, H02M 7/5387, H02M 7/00

(54) **A SWITCHING MODULE FOR A POWER ELECTRONIC SWITCHING ASSEMBLY**

(71) Applicant: GE Energy Power Conversion Technology Ltd, Rugby, Warwickshire CV21 1BD (GB)
(72) Inventor: BRYANT, Angus Toby, Rugby CV21 1BD (GB); MUPAMIBIREYI, Ushindibaba, Rugby CV21 1BD (GB); GOLDNEY, Andrew, Rugby CV21 1BD (GB)
(74) Representative: Serjeants LLP

(57) **Abstract**

A switching module (1) is described. The switching module (1) comprises an H-bridge circuit (2) with four switching assemblies, and an active clamp circuit (6) with four controllable semiconductor switches (S5, S6, ..., S8). Each switching assembly comprises a pair of controllable semiconductor switches electrically connected an anti-series (S1, S2, ..., S4 and S9, S10, ..., S12). Alternatively, each switching assembly may comprise a controllable semiconductor switch and a diode electrically connected in series. The H-bridge circuit (2) comprises first and second AC bridge terminals (AC1, AC2) electrically connectable to a respective coil (4), and first and second DC bridge terminals (DC1, DC2) electrically connectable to a DC current source or to a DC bridge terminal of another switching module. The active clamp circuit (6) comprises first and second DC clamp terminals (DC3, DC4) between which an energy storage device (C) is electrically connected. A plurality of switching modules may be electrically connected together to provide a power electronic switching assembly.

## Description

### Technical Field

The present invention relates to a switching module for a power electronic switching assembly.

The power electronic switching assembly may comprise a plurality of switching modules.

The power electronic switching assembly may be part of a direct current (DC) electrical machine comprising a stator with a plurality of stator coils, each stator coil being electrically connected to a respective switching module. The power electronic switching assembly may also be part of a power converter where each switching module is electrically connected to a respective coil of a transformer assembly.

### Background Art

EP 23155859 describes a switching module that may be used to provide an active commutation and energy recovery process. In one arrangement, a power electronic switching assembly includes a plurality of switching modules and may be used to provide energy-efficient commutation of a direct current (DC) electrical machine, for example.

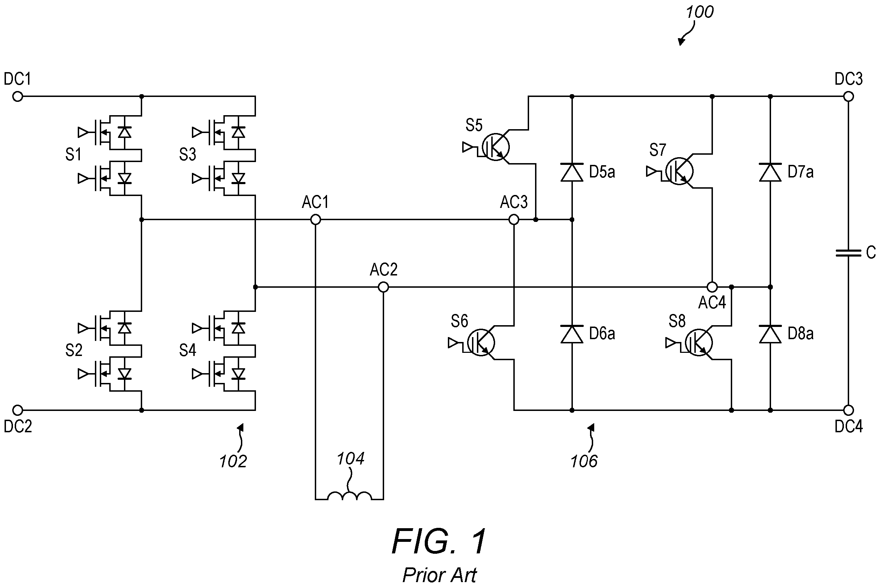

Referring to Figure 1, each switching module 100 includes an H-bridge circuit 102 comprising:
- first and second AC bridge terminals AC1, AC2 electrically connectable to a respective coil 104, e.g., a stator coil of a DC electrical machine,
- first and second DC bridge terminals DC1, DC2 electrically connectable to a DC current source,
- a first switch S1 electrically connected between the first AC bridge terminal AC1 and the first DC bridge terminal DC1,
- a second switch S2 electrically connected between the first AC bridge terminal AC1 and the second DC bridge terminal DC2,
- a third switch S3 electrically connected between the second AC bridge terminal AC2 and the first DC bridge terminal DC1, and
- a fourth switch S4 electrically connected between the second AC bridge AC2 terminal and the second DC bridge terminal DC2.

Each switching module 100 also includes an active clamp circuit 106. The active clamp circuit 106 of each switching module 100 comprises:
- a first AC clamp terminal AC3 electrically connected to the first AC bridge terminal AC1,
- a second AC clamp terminal AC4 electrically connected to the second AC bridge terminal AC2,
- first and second DC clamp terminals DC3, DC4,
- a fifth switch S5 electrically connected between the first AC clamp terminal AC3 and the first DC clamp terminal DC3,
- a sixth switch S6 electrically connected between the first AC clamp terminal AC3 and the second DC clamp terminal DC4,
- a seventh switch S7 electrically connected between the second AC clamp terminal AC4 and the first DC clamp terminal DC3,
- an eighth switch S8 electrically connected between the second AC clamp terminal AC4 and the second DC clamp terminal DC4, and
- an energy storage device (e.g., a capacitor C) electrically connected between the first and second DC clamp terminals DC3, DC4.

In each H-bridge circuit 102, the first and second switches S1, S2 are electrically connected in series between the first and second DC bridge terminals DC1, DC2 as a first bridge leg. The third and fourth switches S3, S4 are electrically connected in series between the first and second DC bridge terminals DC1, DC2 as a second bridge leg. The DC terminals of the first bridge leg and the second bridge leg are electrically connected in parallel. The junction (or connecting point) between the first and second switches S1, S2 defines the first AC bridge terminal AC1 and the junction between the third and fourth switches S3, S4 defines the second AC bridge terminal AC2.

In each active clamp circuit, the fifth and sixth switches S5, S6 are electrically connected in series between the first and second DC clamp terminals DC3, DC4 as a first clamp leg. The seventh and eighth switches S7, S8 are electrically connected in series between the first and second DC clamp terminals DC3, DC4 as a second clamp leg. The first clamp leg and the second clamp leg are electrically connected in parallel. The junction between the fifth and sixth switches S5, S6 defines the first AC clamp terminal AC3 and the junction between the seventh and eighth switches S7, S8 defines the second AC clamp terminal AC4. The energy storage device (i.e., capacitor C) is electrically connected between the first and second DC clamp terminals DC3, DC4 in parallel with the first and second clamp legs.

Each switch S1, S2, ..., S8 in the H-bridge circuit 102 and the active clamp circuit 106 may include one or more controllable semiconductor switches. Any suitable controllable semiconductor switches or combination of switches may be used, e.g., metal-oxide-semiconductor field-effect transistors (MOSFETs), vertical junction field-effect transistors (VJFETs), insulated-gate bipolar transistors (IGBTs), and gate-commutated thyristors. A separate diode may optionally be electrically connected in anti-parallel with each semiconductor switch, or an anti-parallel diode may be an inherent feature of the semiconductor switch itself, e.g., the body diode of the MOSFET structure. Each controllable semiconductor switch is normally switched on and off by gate drive signals generated by a gate driver.

In the H-bridge circuit 102, each switch S1, S2, ..., S4 may be a bidirectional switch, i.e., each switch may provide gate-controlled bidirectional voltage blocking capability with unidirectional current. Each bidirectional switch may consist of: (a) a pair of controllable semiconductor switches as shown in Figure 1, or (b) a controllable semiconductor switch and a diode, where the pair of semiconductor devices are electrically connected in anti-series (or back-to-back) - i.e., so one of the pair of semiconductor devices blocks voltage in a first direction and the other semiconductor device blocks voltage in a second direction, opposite to the first direction. (As used herein, the term "semiconductor device" may refer to a semiconductor switch or a diode as appropriate.) When current is flowing through one of the semiconductor switches in a particular direction, it may flow through an anti-parallel diode of the other anti-series connected semiconductor switch. In the case where each semiconductor switch is a MOSFET, for example, the body diode will inherently act as an anti-parallel diode as shown in Figure 1.

In one practical arrangement of the switching module 100 shown in Figure 1, each switch S1, S2, ..., S4 of the H-bridge circuit 102 is implemented as a pair of MOSFETs electrically connected in anti-series (i.e., arranged to conduct in opposite directions), and each switch S5, S6, ..., S8 of the active clamp circuit 106 is implemented as an IGBT with an anti-parallel diode D5a, D6a, ..., D8a. However, this requires custom pre-packaged modules to be used for the H-bridge circuit, as opposed to conventional "off-the-shelf" pre-packaged modules where the controllable semiconductor switches are electrically connected to conduct in the same direction. In particular, each pre-packaged module comprises a pair of MOSFETs electrically connected in anti-series with a common source arrangement. Such custom pre-packaged modules are normally more expensive than conventional pre-packaged modules and may be obtained from a limited number of suppliers. As used herein, the term "pre-packaged module" refers to a power module with semiconductor devices and optionally other electronic components (e.g., temperature sensors) packaged together in a suitable housing. The modules may also come with pre-applied thermal interface material, for example, for dissipating heat generated by the semiconductor devices. Such pre-packaged modules are often used for wind and solar generation, energy storage, transmission and distribution, and traction applications.

Although it is possible to implement the H-bridge circuit 102 using single or discrete controllable semiconductor switches instead of custom pre-packaged modules, the voltage and current ratings of such single switches are typically either too low or too high to be implemented in a practical switching module which may require the current rating to be in a range of about 200 to 500 A, for example. On the other hand, many conventional pre-packaged modules use controllable semiconductor switches with the required voltage and current ratings, e.g., 1200 to 1700 V and 200 to 500 A. Such "off the shelf" or conventional pre-packaged modules have the following benefits:
- lower cost,
- are obtainable from a large range of suppliers,
- use standardised construction, and
- are available with a wide range of switch options (e.g., SiC MOSFETs and Si IGBTs) with the required voltage and current ratings.

Conventional pre-packaged modules (e.g., chopper modules) with a controllable semiconductor switch and a diode electrically connected in anti-series are also available.

### Summary of the Invention

The present invention aims to address the problems identified above and provides an improved switching module that may be implemented practically using "off the shelf" or conventional pre-packaged modules to take advantage of the cost and supply benefits mentioned above. The present invention provides a switching module comprising:
an H-bridge circuit comprising:
   first and second AC bridge terminals electrically connectable to a respective coil,
   first and second DC bridge terminals electrically connectable to a DC current source or to a DC bridge terminal of another switching module, a first switch assembly electrically connected between the first AC bridge terminal and the first DC bridge terminal, the first switch assembly comprising a first controllable semiconductor switch and a first semiconductor device (i.e., a controllable semiconductor switch or a diode) electrically connected in series,
   a second switch assembly electrically connected between the first AC bridge terminal and the second DC bridge terminal, the second switch assembly comprising a second controllable semiconductor switch and a second semiconductor device (i.e., a controllable semiconductor switch or a diode) electrically connected in series,
   a third switch assembly electrically connected between the second AC bridge terminal and the first DC bridge terminal, the third switch assembly comprising a third controllable semiconductor switch and a third semiconductor device (i.e., a controllable semiconductor switch or a diode) electrically connected in series, and
   a fourth switch assembly electrically connected between the second AC bridge terminal and the second DC bridge terminal, the fourth switch assembly comprising a fourth controllable semiconductor switch and a fourth semiconductor device (e.g., a controllable semiconductor switch or a diode) electrically connected in series; and
an active clamp circuit comprising:
   first and second DC clamp terminals,
   a fifth controllable semiconductor switch electrically connected between the first DC clamp terminal and a junction (or connecting point) between the first controllable semiconductor switch and the first semiconductor device,
   a sixth controllable semiconductor switch electrically connected between the second DC clamp terminal and a junction between the second controllable semiconductor switch and the second semiconductor device,
   a seventh controllable semiconductor switch electrically connected between the first DC clamp terminal and a junction between the third controllable semiconductor switch and the third semiconductor device, an eighth controllable semiconductor switch electrically connected between the second DC clamp terminal and a junction between the fourth controllable semiconductor switch and the fourth semiconductor device, and
   an energy storage device electrically connected between the first and second DC clamp terminals.

A junction between the first and second controllable semiconductor switches defines the first AC bridge terminal and a junction between the third and fourth controllable semiconductor switches defines the second AC bridge terminal.

*Switch assemblies of the H-bridge circuit comprise a pair of series-connected controllable semiconductor switches:*
In one arrangement, the first, second, third and fourth semiconductor devices are controllable semiconductor switches - i.e., each switch assembly of the H-bridge circuit may comprise a pair of controllable semiconductor switches. The pair of controllable semiconductor switches of each switch assembly are electrically connected in anti-series (i.e., arranged to conduct in opposite directions).

In this arrangement, for convenience, the first semiconductor device is referred to as a ninth controllable semiconductor switch, the second semiconductor device is referred to as a tenth controllable semiconductor switch, the third semiconductor device is referred to as an eleventh controllable semiconductor switch, and the fourth semiconductor device is referred to a twelfth controllable semiconductor switch.

The first and ninth controllable semiconductor switches may be electrically connected in anti-series. The first controllable semiconductor switch may be electrically connected to the first AC bridge terminal and the ninth controllable semiconductor switch may be electrically connected to the first DC bridge terminal.

The second and tenth controllable semiconductor switches may be electrically connected in anti-series. The second controllable semiconductor switch may be electrically connected to the first AC bridge terminal and the tenth controllable semiconductor switch may be electrically connected to the second DC bridge terminal.

The third and eleventh controllable semiconductor switches may be electrically connected in anti-series. The third controllable semiconductor switch may be electrically connected to the second AC bridge terminal and the eleventh controllable semiconductor switch may be electrically connected to the first DC bridge terminal.

The fourth and twelfth controllable semiconductor switches may be electrically connected in anti-series. The fourth controllable semiconductor switch may be electrically connected to the second AC bridge terminal and the twelfth controllable semiconductor switch may be electrically connected to the second DC bridge terminal.

All of the controllable semiconductor switches of the switching module may be of the same type. In particular, it will be understood that the same type of controllable semiconductor switch may be used to implement both the H-bridge circuit and the active clamp circuit. All of the controllable semiconductor switches may have the same rating.

Any suitable fully-controllable semiconductor switches may be used, e.g., metal-oxide-semiconductor field-effect transistors (MOSFETs), vertical junction field-effect transistors (VJFETs), insulated-gate bipolar transistors (IGBTs), high-electron-mobility transistors (HEMTs), bipolar junction transitions (BJT), and gate-commutated thyristors (GCTs) or gate turn-off thyristors (GTOs), for example. A separate diode may optionally be electrically connected in anti-parallel with each semiconductor switch, or an anti-parallel diode may be an inherent feature of the semiconductor switch itself, e.g., the body diode of the MOSFET structure.

Each controllable semiconductor switch is normally switched on and off by gate drive signals generated by a gate driver.

In one particular arrangement, all of the controllable semiconductor switches of the H-bridge circuit and the active clamp circuit may be implemented as MOSFETs. The first and ninth controllable semiconductor switches are preferably electrically connected in anti-series in a common drain configuration. The second and tenth controllable semiconductor switches are preferably electrically connected in anti-series in a common source configuration. The third and eleventh controllable semiconductor switches are preferably electrically connected in anti-series in a common drain configuration. The fourth and twelfth controllable semiconductor switches are preferably electrically connected in anti-series in a common source configuration.

In one arrangement of the switching module, the first and second controllable semiconductor switches may be of the same type and may be implemented as a pre-packaged module in which the first and second controllable semiconductor switches are arranged to conduct in the same direction. In other words, the first and second controllable semiconductor switches may be implemented using the pair of controllable semiconductor switches that are packaged together in a conventional pre-packaged module.

The third and fourth controllable semiconductor switches may be of the same type and may be implemented as a pre-packaged module in which the third and fourth controllable semiconductor switches are arranged to conduct in the same direction. In other words, the third and fourth controllable semiconductor switches may be implemented using the pair of controllable semiconductor switches that are packaged together in a conventional pre-packaged module.

The fifth and ninth controllable semiconductor switches may be of the same type and may be implemented as a pre-packaged module in which the fifth and ninth controllable semiconductor switches are arranged to conduct in the same direction. In other words, the fifth and ninth controllable semiconductor switches, despite the fact they are used for the active clamp circuit and the H-bridge circuit, respectively, may be implemented using the pair of controllable semiconductor switches that are packaged together in a conventional pre-packaged module.

The sixth and tenth controllable semiconductor switches may be of the same type and may be implemented as a pre-packaged module in which the sixth and tenth controllable semiconductor switches are arranged to conduct in the same direction. In other words, the sixth and tenth controllable semiconductor switches, despite the fact that they are used for the active clamp circuit and the H-bridge circuit, respectively, may be implemented using the pair of controllable semiconductor switches that are packaged together in a conventional pre-packaged module.

The seventh and eleventh controllable semiconductor switches may be of the same type and may be implemented as a pre-packaged module in which the seventh and eleventh controllable semiconductor switches are arranged to conduct in the same direction. In other words, the seventh and eleventh controllable semiconductor switches, despite the fact they are used for the active clamp circuit and the H-bridge circuit, respectively, may be implemented using the pair of controllable semiconductor switches that are packaged together in a conventional pre-packaged module.

The eighth and twelfth controllable semiconductor switches may be of the same type and may be implemented as a pre-packaged module in which the eighth and twelfth controllable semiconductor switches are arranged to conduct in the same direction. In other words, the eighth and twelfth controllable semiconductor switches, despite the fact they are used for the active clamp circuit and the H-bridge circuit, respectively, may be implemented using the pair of controllable semiconductor switches that are packaged together in a conventional pre-packaged module.

The pre-packaged modules may be half-bridge modules, for example. In other words, each pair of controllable semiconductor switches (e.g., the first and second controllable semiconductor switches, the third and fourth controllable semiconductor switches, the fifth and ninth controllable semiconductor switches etc.) may be implemented as separate half-bridge modules. In this arrangement, six conventional or "off the shelf" pre-packaged half-bridge modules are needed to implement each switching module. Such half-bridge modules may include a pair of controllable semiconductor switches that define a single leg. However, other pre-packaged modules may also be used to implement a switching module. For example, the pre-packaged module may have two or more pairs of controllable semiconductors that define two or more legs provided the leg terminals not electrically connected together (e.g., the DC terminals are not connected to each other). This would allow multiple pairs of controllable semiconductor switches of the switching module to be implemented in the same pre-packaged module. For example, if each pre-packaged module includes a first pair of controllable semiconductor switches that defines a first leg and a second pair of controllable semiconductor switches that defines a second leg, only three conventional or "off the shelf" pre-packaged modules are needed to implement each switching module. If each pre-packaged module also includes a third pair of controllable semiconductor switches that defines a third leg, only two conventional or "off the shelf" pre-packaged modules are needed to implement each switching module. This may provide a more compact switching module and may reduce costs. A combination of different pre-packaged modules may be used, but they will preferably all use the same type of controllable semiconductor switches.

*Switch assemblies of the H-bridge circuit comprise a series-connected controllable semiconductor switch and a diode:*
In another arrangement, the first, second, third and fourth semiconductor devices are diodes - i.e., each switch assembly of the H-bridge circuit may comprise a controllable semiconductor switch and a diode electrically connected in series and arranged to conduct in the same direction.

In this arrangement, for convenience, the first semiconductor device is referred to as a first diode, the second semiconductor device is referred to as a second diode, the third semiconductor device is referred to as third diode, and the fourth semiconductor device is referred to a fourth diode.

The first controllable semiconductor switch and the first diode may be electrically connected in series and arranged to conduct in the same direction. The first controllable semiconductor switch may be electrically connected to the first AC bridge terminal and the first diode may be electrically connected to the first DC bridge terminal.

The second controllable semiconductor switch and the second diode may be electrically connected in series and arranged to conduct in the same direction. The second controllable semiconductor switch may be electrically connected to the first AC bridge terminal and the second diode may be electrically connected to the second DC bridge terminal.

The third controllable semiconductor switch and the third diode may be electrically connected in series and arranged to conduct in the same direction. The third controllable semiconductor switch may be electrically connected to the second AC bridge terminal and the third diode may be electrically connected to the first DC bridge terminal.

The fourth controllable semiconductor switch and the fourth diode may be electrically connected in series and arranged to conduct in the same direction. The fourth controllable semiconductor switch may be electrically connected to the second AC bridge terminal and the fourth diode may be electrically connected to the second DC bridge terminal.

All of the controllable semiconductor switches may be of the same type. In particular, it will be understood that the same type of controllable semiconductor switch may be used to implement both the H-bridge circuit and the active clamp circuit. All of the controllable semiconductor switches may have the same rating.

Any suitable fully-controllable semiconductor switches may be used, e.g., vertical junction field-effect transistors (VJFETs), insulated-gate bipolar transistors (IGBTs), high-electron-mobility transistors (HEMTs), bipolar junction transitions (BJT), and gate-commutated thyristors (GCTs) or gate turn-off thyristors (GTOs), for example. A separate diode may optionally be electrically connected in anti-parallel with each semiconductor switch.

Each controllable semiconductor switch is normally switched on and off by gate drive signals generated by a gate driver.

In one particular arrangement, all of the controllable semiconductor switches of the H-bridge circuit and the active clamp circuit may be implemented as IGBTs with associated anti-parallel diodes, for example.

In one arrangement of the switching module, the first and second controllable semiconductor switches may be of the same type and may be implemented as a pre-packaged module in which the first and second controllable semiconductor switches are arranged to conduct in the same direction. In other words, the first and second controllable semiconductor switches may be implemented using the pair of controllable semiconductor switches that are packaged together in a conventional pre-packaged module.

The third and fourth controllable semiconductor switches may be of the same type and may be implemented as a pre-packaged module in which the third and fourth controllable semiconductor switches are arranged to conduct in the same direction. In other words, the third and fourth controllable semiconductor switches may be implemented using the pair of controllable semiconductor switches that are packaged together in a conventional pre-packaged module.

The fifth controllable semiconductor switch and the first diode may be implemented as a pre-packaged module in which the fifth controllable semiconductor switch and the first diode are electrically connected in anti-series, i.e., arranged to conduct in opposite directions. In other words, the fifth controllable semiconductor switch and the first diode, despite the fact they are used for the active clamp circuit and the H-bridge circuit, respectively, may be implemented using the controllable semiconductor switch and diode that are packaged together in a conventional pre-packaged module.

The sixth controllable semiconductor switch and the second diode may be implemented as a pre-packaged module in which the sixth controllable semiconductor switch and the second diode are electrically connected in anti-series, i.e., arranged to conduct in opposite directions. In other words, the sixth controllable semiconductor switch and the second diode, despite the fact that they are used for the active clamp circuit and the H-bridge circuit, respectively, may be implemented using the controllable semiconductor switch and diode that are packaged together in a conventional pre-packaged module.

The seventh controllable semiconductor switch and the third diode may be implemented as a pre-packaged module in which the seventh controllable semiconductor switch and the third diode are electrically connected in anti-series, i.e., arranged to conduct in opposite directions. In other words, the seventh controllable semiconductor switch and the third diode, despite the fact they are used for the active clamp circuit and the H-bridge circuit, respectively, may be implemented using the controllable semiconductor switch and diode that are packaged together in a conventional pre-packaged module.

The eighth controllable semiconductor switch and the fourth diode may be implemented as a pre-packaged module in which the eighth controllable semiconductor switch and the fourth diode are electrically connected in anti-series, i.e., arranged to conduct in opposite directions. In other words, the eighth controllable semiconductor switch and the fourth diode, despite the fact they are used for the active clamp circuit and the H-bridge circuit, respectively, may be implemented using the controllable semiconductor switch and diode that are packaged together in a conventional pre-packaged module.

The pre-packaged module for the first and second controllable semiconductor switches may be a first pre-packaged half-bridge module and the pre-packaged module for the third and fourth controllable semiconductor switches may be a second pre-packaged half-bridge module. Alternatively, the first, second, third and fourth controllable semiconductor switches may be implemented as a single pre-packaged module having two pairs of controllable semiconductor switches that define two legs as described above. The remaining pre-packaged modules may be chopper modules where each chopper module comprises a controllable semiconductor switch (e.g., an IGBT and anti-parallel diode) electrically connected in anti-series with a diode. If each pre-packaged chopper module includes one controllable semiconductor switch and one diode, five or six conventional or "off the shelf" pre-packaged modules are needed to implement each switching module. Fewer pre-packaged modules would be needed if each pre-packaged chopper module includes two or more legs, each leg including a controllable semiconductor switch electrically connected in anti-series with a diode.

However, in a practical arrangement, the remaining pre-packaged modules may also be half-bridge modules where each pre-packaged module comprises a first controllable semiconductor switch (e.g., an IGBT) and first anti-parallel diode electrically connected in anti-series with a second controllable semiconductor switch (e.g., an IGBT) and second anti-parallel diode. The pre-packaged half-bridge modules may have two or more pairs of controllable semiconductors that define two or more legs as described above. This would allow multiple pairs of controllable semiconductor switches of the switching module to be implemented in the same pre-packaged module. One of the first and second controllable semiconductor switches of each half-bridge module (or each leg) may be disabled (e.g., by shorting the gate and emitter terminals in the case of an IGBT) thereby effectively making that switch redundant without affecting the respective anti-parallel diode. This would allow the switching module to be implemented using six (or fewer) identical pre-packaged modules, for example, but where for the pre-packaged modules with a disabled controllable semiconductor switch, only the non-disabled (or active) controllable semiconductor switches is switched on and off. The other controllable semiconductor switch would be disabled, but current may still flow through its respective anti-parallel diode. A combination of different pre-packaged modules (e.g., half-bridge and chopper modules) may be used, but they will preferably all use the same type of controllable semiconductor switches.

Implementing the H-bridge circuit and the active clamp circuit with MOSFETs would minimise conduction losses. Using IGBTs may be less expensive, but the switching module would have higher conduction losses. Both arrangements using MOSFETs and IGBTs would require a total of six (or fewer) pre-packaged modules.

As compared to the practical arrangement of the known switching module described above, where each switch of the H-bridge circuit is implemented as a pair of MOSFETs electrically connected in anti-series (i.e., arranged to conduct in opposite directions), and each switch of the active clamp circuit is implemented as an IGBT with an anti-parallel diode, implementing the H-bridge circuit and the active clamp circuit of the present invention with MOSFETs would require a small increase in gate drivers, i.e., twelve instead of eight because in the known switching module a single gate driver may be used to control the anti-series pair of MOSFETs of each switch to switch on and off. The total chip area of each switch remains the same. Only eight gate drivers are needed if the H-bridge circuit and the active clamp circuit are implemented with IGBTs (or any other suitable type of controllable semiconductor device) with anti-parallel diodes. This is still the case if the switching module is implemented using six (or fewer) identical pre-packaged modules (e.g., half-bridge modules) where one of the first and second controllable semiconductor switches in four of the pre-packaged modules is disabled (e.g., by shorting the gate and emitter terminals of an IGBT if used).

Because all of the controllable semiconductor switches are preferably of the same type (e.g., all MOSFETs or all IGBTs or other suitable fully-controllable semiconductor switches) and are preferably provided in pre-packaged modules, they will typically have the same voltage and current rating. In other words, the controllable semiconductor switches of the active clamp circuit will now be rated to handle the full current flowing through the H-bridge circuit, whereas previously these switches may have had a lower rating. Although the controllable semiconductor switches of the active clamp circuit do not require this higher rating for normal operation, i.e., for providing energy recovery during operation of the switching module, the higher rating may be useful for certain situations such as fault conditions, high-frequency applications, or dynamic braking (see below), where higher currents may flow through the active clamp circuit.

The energy storage device may be a capacitor. Any suitable capacitor with any suitable rating may be used. Alternatively, the energy storage device may be a battery or other suitable device, for example.

The first and second AC terminals of the switching module may be electrically connectable to a single coil or to two or more coils that are electrically connected in series or parallel.

The switching module may be associated with one or more electronic circuits, e.g., a control circuit, gate driver circuits for driving the controllable semiconductor switches etc. The electronic circuits may communicate with a main controller by a fibre-optic link or other galvanically-isolated communication channel, for example. The electronic circuits will typically require a power supply. In one arrangement, power for the electronic circuits may be provided by the energy storage device of the switching module instead of being supplied by a separate power supply. The switching module may therefore comprise a power supply circuit (e.g., a low voltage power supply circuit) electrically connected between the first and second DC clamp terminals in parallel with the energy storage device. The power supply circuit may be electrically connectable to the one or more local electronic circuits. The power supply circuit may comprise a power converter, e.g., a step-down power converter to derive a suitable output voltage from the energy storage device voltage. A suitable power converter may be a DC/DC power converter such as a forward converter or flyback converter, for example. The energy storage device may be charged by a DC current source through the first and second DC bridge terminals or by a current that is induced in the coil that is electrically connected to the first and second AC bridge terminals, where in the latter case the induced current will flow through one or more semiconductor devices of the H-bridge circuit and the clamp circuit. Once the energy storage device has been charged, e.g., by carrying out a pre-charge process, the power supply circuit may be used to provide power to the one or more electronic circuits associated with the switching module.

The switching module may further comprise a battery (or a battery bank comprising a plurality of electrically connected batteries) electrically connected between the first and second DC clamp terminals in parallel with the energy storage device. Integrating additional energy storage beyond what is needed for energy recovery may provide a distributed energy storage network for a power electronic switching assembly that comprises a plurality of switching modules. The distributed energy storage network may be used to black-start an electrical machine or other load that is electrically connected to the switching module, e.g., by controlling the controllable semiconductor devices of the active clamp circuit to discharge the battery or battery bank, or for voltage regulation. The battery voltage and the state of charge (SoC) of the battery may be controlled by the active clamp circuit. The active clamp circuit may be designed to match the battery voltage range across the allowable variation of the SoC of the battery. In some situations, the battery may also be used to absorb excess power induced in the coil electrically connected to the first and second AC bridge terminals, e.g., during an overspeed condition of a DC electrical machine that includes a plurality of switching modules and where each switching module is electrically connected to a stator coil of the DC electrical machine.

The switching module may further comprise a dynamic braking system electrically connected between the first and second DC clamp terminals in parallel with the energy storage device. The dynamic braking system may be of any suitable type. For example, the dynamic braking system may comprise a braking resistor and a controllable semiconductor switch electrically connected in series between the first and second DC clamp terminals. The dynamic braking system may also comprise a diode electrically connected in parallel with the braking resistor. The dynamic braking system may be used to provide short-term power dissipation, e.g., during an overspeed condition of a DC electrical machine.

A switching module may have one or more of the power supply circuit, the battery for distributed energy storage, the dynamic braking system, or any other suitable circuit, electrically connected in parallel with the energy storage device.

The present invention further provides a DC electrical machine comprising:
a stator with a plurality of stator coils;
a rotor;
a DC current source; and
a power electronic switching assembly comprising n switching modules as described above, wherein n is an integer greater than or equal to two. The first and second AC bridge terminals of each switching module are electrically connected to at least one respective stator coil. The first DC bridge terminal of a first switching module is electrically connected to the DC current source, the second DC bridge terminal of an nth switching module is electrically connected to the DC current source, and the first and second DC bridge terminals of the remaining switching modules are electrically connected in series. For example, the first DC bridge terminal of the first switching module is electrically connected to the DC current source (e.g., to a first DC terminal thereof), the second DC bridge terminal of the first switching module is electrically connected to the first DC bridge terminal of a second switching module, the second DC bridge terminal of the second switching module is electrically connected to the first DC bridge terminal of a third switching module, and so on, until the second DC bridge terminal of an (n-1)th switching module is electrically connected to the first DC bridge terminal of the nth switching module, and the second DC bridge terminal of the nth switching module is electrically connected to the DC current source (e.g., to a second DC terminal thereof). Put another way, the switching modules may be electrically connected with a series chain link structure between DC terminals of the DC current source. Two or more sets of switching modules that are electrically connected with a series chain link structure may be electrically connected between DC terminals of the DC current source in parallel. The switching modules may also be electrically connected together in other ways to define the power electronic switching assembly.

The stator coils may be received in slots formed in the stator. The stator coils may be of any suitable type (e.g., single-layer, two-layer etc.) and may be arranged around the stator to have any suitable winding topology. The rotor rotates relative to the stationary stator and is spaced apart from the stator by an airgap. The rotor may be of any suitable type (e.g., a permanent magnet type or a wound rotor type with any suitable excitation such as field winding with slip rings, brushless etc.) The rotor may be synchronous rotor or a non-synchronous/induction rotor.

The DC current source may be a power converter, e.g., an AC/DC power converter having first and second DC terminals that are electrically connected to the first and nth switching modules of the power electronic switching assembly, and two or more AC terminals that are electrically connected to an AC circuit or power grid (e.g., a three-phase power grid). The AC/DC power converter may be a current source inverter or a thyristor converter (6p, 12p etc.), for example. The DC current source may be a DC/DC power converter having first and second DC terminals that are electrically connected to the first and nth switching modules of the power electronic switching assembly, and third and fourth DC terminals that are electrically connected to a DC circuit or storage device such as a battery, for example. The DC current source may also be another DC electrical machine, e.g., a generator that provides a DC output voltage.

Each switching module may further comprise a controller adapted to commutate the respective switching module according to a coil commutation process (i.e., where the current flowing through the coil reverses). Alternatively, one or more controllers may be associated with two or more switching modules and each controller is adapted to commutate the switching modules according to a respective coil commutation process.

The coil of each switching module may be commutated and the respective coil commutation processes may be interleaved. The stator coils of the DC electrical machine may be arranged around the stator in order to provide a plurality of phase-shifted coil voltages - typically having a plurality of phases. For example, a DC electrical machine having p phases might include at least a first group of p stator coils whose EMFs are phase-displaced from one another by 360/p⁰, wherein p is an integer greater than or equal to two, one cycle of stator fundamental frequency occupies 360⁰, and each EMF experiences two zero crossings per cycle. A DC electrical machine according to the present invention may have any convenient number of stator coils and may therefore have a larger number of phases with small phase-displacements between EMFs. The number of coil commutation events per cycle of stator fundamental frequency is equal to twice the number of phases, hence successive coil commutations become interleaved. In the case of a DC electrical machine having many phases, several overlapping coil commutation events may be in progress at any given time.

The timing parameters of each coil commutation event may be varied or adjusted in order to provide closed loop control of the voltage across the energy storage device of the active clamp circuit of the respective switching module.

The present invention also provides a power converter comprising:
a transformer assembly comprising a plurality of first coils;
a DC current source; and
a power electronic switching assembly comprising n switching modules as described above, wherein n is an integer greater than or equal to two. The first and second AC bridge terminals of each switching module are electrically connected to a respective first coil of the transformer assembly. The first DC bridge terminal of a first switching module is electrically connected to the DC current source, the second DC bridge terminal of an nth switching module is electrically connected to the DC current source, and the first and second DC bridge terminals of the remaining switching modules are electrically connected in series. For example, the first DC bridge terminal of the first switching module is electrically connected to the DC current source (e.g., to a first DC terminal thereof), the second DC bridge terminal of the first switching module is electrically connected to the first DC bridge terminal of a second switching module, the second DC bridge terminal of the second switching module is electrically connected to the first DC bridge terminal of a third switching module, and so on, until the second DC bridge terminal of an (n-1)th switching module is electrically connected to the first DC bridge terminal of the nth switching module, and the second DC bridge terminal of the nth switching module is electrically connected to the DC current source (e.g., to a second DC terminal thereof). Put another way, the switching modules may be electrically connected with a series chain link structure between DC terminals of the DC current source. The switching modules may also be electrically connected together in other ways (e.g., in series, parallel or series-parallel) to define the power electronic switching assembly.

Each switching module may be electrically connected to respective first coil by means of a capacitor.

Each switching module may function as a DC/AC power converter with an output current waveform being generated in each first coil. The output current waveforms may have any suitable frequency, e.g., about 1-10 kHz or higher. This allows the size of the transformer assembly to be minimised and a high power density to be achieved.

The transformer assembly may further comprise a plurality of second coils, each second coil being associated with a first coil (e.g., having coupled primary and secondary coils). In other words, the transformer assembly may comprise a plurality of individual transformers units, each transformer unit comprising physically separated, electromagnetically coupled primary and secondary coils. Each second coil may be electrically connected to a respective AC/DC power converter. Any suitable AC/DC power converters may be used. For example, each AC/DC power converter may have two AC terminals that are electrically connected to the respective second coil, and two DC terminals that are electrically connected to a DC circuit. The second coils may alternatively be electrically connected to common AC/DC power converter, for example.

The power converter may therefore provide medium-frequency galvanic isolation between the DC current source and the DC circuit. The DC circuit may comprise one or more energy storage devices, e.g., capacitors.

If an AC output voltage is required, it may be derived from the DC circuit using any suitable DC/AC power converter. For example, the DC/AC power converter may have two DC terminals that are electrically connected to the DC circuit and two or more AC terminals that provide the desired AC output voltage at a desired frequency (e.g., 60 Hz).

Each switching module may also function as a switch mode converter (e.g., forward or flyback converter, dual active bridge (DAB) converter, Cuk converter, single-ended primary-inductor converter (SEPIC) etc.) or a resonant converter, for example.

A switching module of a power electronic switching assembly may be bypassed in the event of a fault in the H-bridge or active clamp circuits. A bypass switch (e.g., a mechanical switch or a controllable semiconductor switch) may be electrically connected between the first and second DC bridge terminals of each switching module. The bypass switch will normally be switched off (or it will normally be open so as to not allow current to flow through the bypass circuit between the first and second DC bridge terminals) but may be selectively switched on (or closed) to bypass the H-bridge circuit. This allows the power electronic switching assembly to continue to operate, perhaps at a slightly reduced rating, if one or more of the switching modules have failed and need to be bypassed.

### Detailed description

Figure 1 is a schematic circuit diagram showing a known switching module;
Figure 2 is a schematic circuit diagram showing a first switching module according to the present invention;
Figures 3A and 3B are schematic circuit diagrams of the first switching module shown in Figure 2;
Figure 3C is a schematic diagram of a pre-packaged module that may be used to implement the first switching module shown in Figure 2;
Figures 4A and 4B are schematic circuit diagrams of a second switching module;
Figures 4C, 4D, 4E and 4F are schematic circuit diagrams of pre-packaged modules that may be used to implement the second switching module shown in Figures 4A and 4B;
Figures 5A to 5F are schematic circuit diagrams showing a coil commutation process of the second switching module shown in Figures 4A and 4B;
Figure 6 is a schematic circuit diagram of the second switching module of Figures 4A and 4B with a power supply circuit;
Figure 7 is a schematic circuit diagram of the second switching module of Figures 4A and 4B with a battery for distributed energy storage;
Figure 8 is a schematic circuit diagram of the second switching module of Figures 4A and 4B with a dynamic braking system;
Figure 9 is a schematic circuit diagram of a direct current (DC) electrical machine with a power electronic switching assembly having a plurality of switching modules;
Figure 10 is a schematic circuit diagram of a power converter with a power electronic switching assembly having a plurality of switching modules;
Figure 11 is a schematic circuit diagram of a switching module, transformer unit, and AC/DC power converter of the power converter of Figure 10; and
Figure 12 is a schematic circuit diagram of the second switching module of Figures 4A and 4B with a bypass switch.

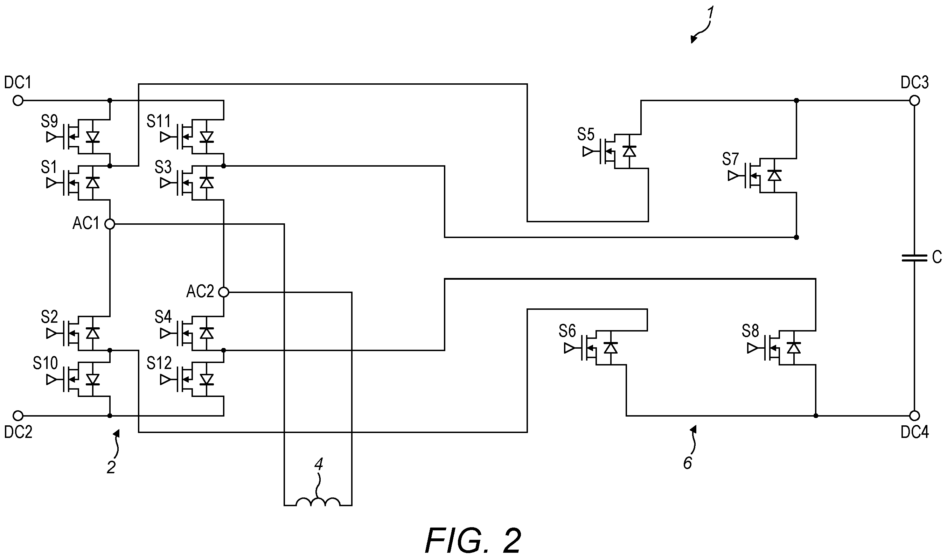

Referring to Figure 2, a switching module 1 according to the present invention includes an H-bridge circuit 2. The H-bridge circuit 2 includes:
- first and second AC bridge terminals AC1, AC2 electrically connectable to a respective coil 4,
- first and second DC bridge terminals DC1, DC2 electrically connectable to a DC current source or to a DC bridge terminal of another switching module,
- a first switch assembly electrically connected between the first AC bridge terminal AC1 and the first DC bridge terminal DC1, the first switch assembly comprising a first controllable semiconductor switch S1 and a ninth controllable semiconductor switch S9 electrically connected in series,
- a second switch assembly electrically connected between the first AC bridge terminal AC1 and the second DC bridge terminal DC2, the second switch assembly comprising a second controllable semiconductor switch S2 and a tenth controllable semiconductor switch S10 electrically connected in series,
- a third switch assembly electrically connected between the second AC bridge terminal AC2 and the first DC bridge terminal DC1, the third switch assembly comprising a third controllable semiconductor switch S3 and an eleventh controllable semiconductor switch S11 electrically connected in series, and
- a fourth switch assembly electrically connected between the second AC bridge terminal AC2 and the second DC bridge terminal DC2, the fourth switch assembly comprising a fourth controllable semiconductor switch S4 and a twelfth controllable semiconductor switch S12 electrically connected in series.

The first and second AC terminals AC1, AC2 of the switching module 1 are shown to be electrically connected to a single coil 4. But the switching module 1 may be electrically connected or to two or more coils that are electrically connected in series or parallel.

The switching module 1 also includes an active clamp circuit 6 comprising:
- first and second DC clamp terminals DC3, DC4,
- a fifth controllable semiconductor switch S5 electrically connected between the first DC clamp terminal DC3 and a junction (or connecting point) between the first and ninth controllable semiconductor switches S1, S9,
- a sixth controllable semiconductor switch S6 electrically connected between the second DC clamp terminal DC4 and a junction between the second and tenth controllable semiconductor switches S2, S10,
- a seventh controllable semiconductor switch S7 electrically connected between the first DC clamp terminal DC3 and a junction between the third and eleventh controllable semiconductor switches S3, S11,
- an eighth controllable semiconductor switch S8 electrically connected between the second DC clamp terminal DC4 and a junction between the fourth and twelfth controllable semiconductor switches S4, S12, and
- an energy storage device (i.e., capacitor C) electrically connected between the first and second DC clamp terminals DC3, DC4.

A junction between the first and second controllable semiconductor switches S1, S2 defines the first AC bridge terminal AC1 and a junction between the third and fourth controllable semiconductor switches S3, S4 defines the second AC bridge terminal AC2.

In the switching module 1 shown in Figure 2, each switch assembly of the H-bridge circuit 2 includes a pair of controllable semiconductor switches (e.g., the first and ninth controllable semiconductor switches S1, S9). The pair of controllable semiconductor switches of each switch assembly are electrically connected in anti-series (i.e., arranged to conduct in opposite directions). In particular:
- The first and ninth controllable semiconductor switches S1, S9 are electrically connected in anti-series. The first controllable semiconductor switch S1 is electrically connected to the first AC bridge terminal AC1 and the ninth controllable semiconductor switch S9 is electrically connected to the first DC bridge terminal DC1.
- The second and tenth controllable semiconductor switches S2, S10 are electrically connected in anti-series. The second controllable semiconductor switch S2 is electrically connected to the first AC bridge terminal AC1 and the tenth controllable semiconductor switch S10 is electrically connected to the second DC bridge terminal DC2.

- The third and eleventh controllable semiconductor switches S3, S11 are electrically connected in anti-series. The third controllable semiconductor switch S3 is electrically connected to the second AC bridge terminal AC2 and the eleventh controllable semiconductor switch S11 is electrically connected to the first DC bridge terminal DC1.
- The fourth and twelfth controllable semiconductor switches S4, S12 are electrically connected in anti-series. The fourth controllable semiconductor switch S4 is electrically connected to the second AC bridge terminal AC2 and the twelfth controllable semiconductor switch S12 is electrically connected to the second DC bridge terminal DC2.

All of the controllable semiconductor switches S1, S2, ..., S12 of the switching module 1 are of the same type and have the same rating. In the switching module 1 shown in Figure 2, all of the controllable semiconductor switches S1, S2, ..., S12 are MOSFETs. Each MOSFET includes a body diode as part of the MOSFET structure. It will be understood that other controllable semiconductor switches may also be used as appropriate.

The first and ninth controllable semiconductor switches S1, S9 are electrically connected in anti-series in a common drain configuration. The second and tenth controllable semiconductor switches S2, S10 are electrically connected in anti-series in a common source configuration. The third and eleventh controllable semiconductor switches S3, S11 are electrically connected in anti-series in a common drain configuration. The fourth and twelfth controllable semiconductor switches S4, S12 are electrically connected in anti-series in a common source configuration.

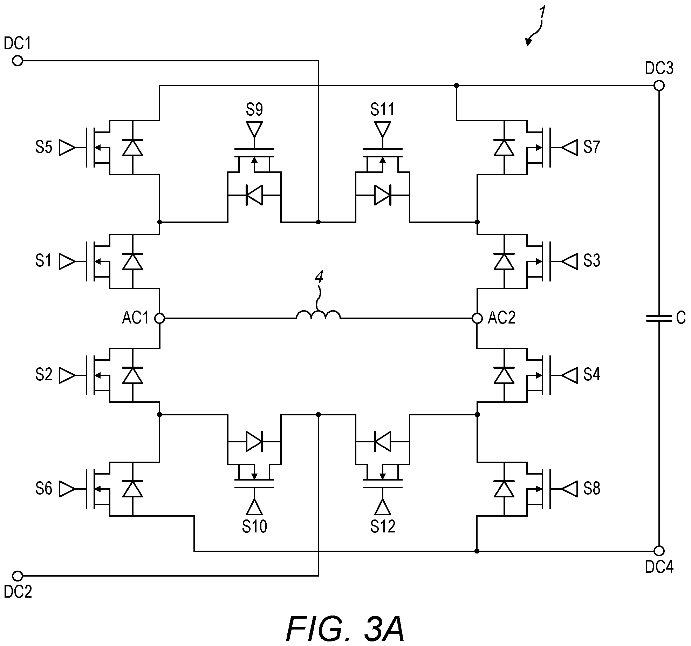

The same switching module 1 is shown in Figure 3A.

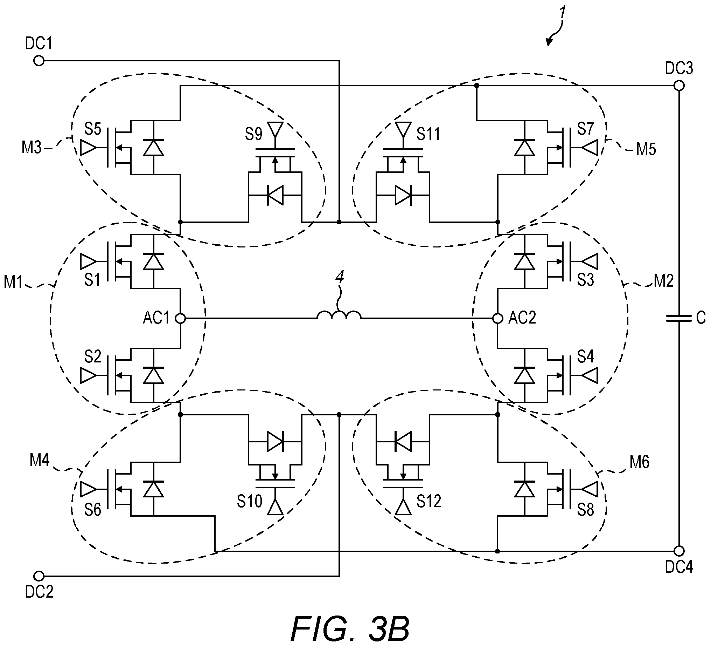

Referring to Figure 3B, the first and second controllable semiconductor switches S1, S2 are of the same type and are implemented as a first pre-packaged module M1 in which the first and second controllable semiconductor switches S1, S2 are arranged to conduct in the same direction. In other words, the first and second controllable semiconductor switches S1, S2 are implemented using the pair of controllable semiconductor switches that are packaged together in a conventional pre-packaged module.

The third and fourth controllable semiconductor switches S3, S4 are of the same type and are implemented as a second pre-packaged module M2 in which the third and fourth controllable semiconductor switches S3, S4 are arranged to conduct in the same direction. In other words, the third and fourth controllable semiconductor switches S3, S4 are implemented using the pair of controllable semiconductor switches that are packaged together in a conventional pre-packaged module.

The fifth and ninth controllable semiconductor switches S5, S9 are of the same type and are implemented as a third pre-packaged module M3 in which the fifth and ninth controllable semiconductor switches S5, S9 are arranged to conduct in the same direction. In other words, the fifth and ninth controllable semiconductor switches S5, S9, despite the fact they are used for the active clamp circuit 6 and the H-bridge circuit 2, respectively, are implemented using the pair of controllable semiconductor switches that are packaged together in a conventional pre-packaged module.

The sixth and tenth controllable semiconductor switches S6, S10 are of the same type and are implemented as a fourth pre-packaged module M4 in which the sixth and tenth controllable semiconductor switches S6, S10 are arranged to conduct in the same direction. In other words, the sixth and tenth controllable semiconductor switches S6, S10, despite the fact that they are used for the active clamp circuit 6 and the H-bridge circuit 2, respectively, are implemented using the pair of controllable semiconductor switches that are packaged together in a conventional pre-packaged module.

The seventh and eleventh controllable semiconductor switches S7, S11 are of the same type and are implemented as a fifth pre-packaged module M5 in which the seventh and eleventh controllable semiconductor switches S7, S11 are arranged to conduct in the same direction. In other words, the seventh and eleventh controllable semiconductor switches S7, S11, despite the fact they are used for the active clamp circuit 6 and the H-bridge circuit 2, respectively, are implemented using the pair of controllable semiconductor switches that are packaged together in a conventional pre-packaged module.

The eighth and twelfth controllable semiconductor switches S8, S12 are of the same type and are implemented as a sixth pre-packaged module M6 in which the eighth and twelfth controllable semiconductor switches S8, S12 are arranged to conduct in the same direction. In other words, the eighth and twelfth controllable semiconductor switches S8, S12, despite the fact they are used for the active clamp circuit 6 and the H-bridge circuit 2, respectively, are implemented using the pair of controllable semiconductor switches that are packaged together in a conventional pre-packaged module.

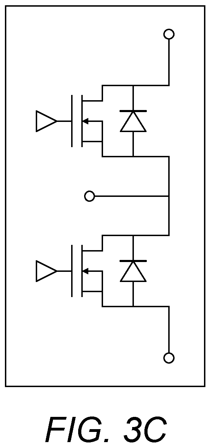

In this arrangement, six conventional or "off the shelf" pre-packaged modules M1, M2, ..., M6 are needed to implement a switching module. The pre-packaged modules M1, M2, ..., M6 may be half-bridge modules, for example. An example of a half-bridge module is shown in Figure 3C with a pair of MOSFETs electrically connected in series and arranged to conduct in the same direction. As described above, the switching module may be implemented using fewer pre-packaged modules if each pre-packaged module has two or more pairs of controllable semiconductors that define two or more legs provided the leg terminals not electrically connected together (e.g., the DC terminals are not connected to each other). This allows multiple pairs of controllable semiconductor switches of the switching module to be implemented in the same pre-packaged module.

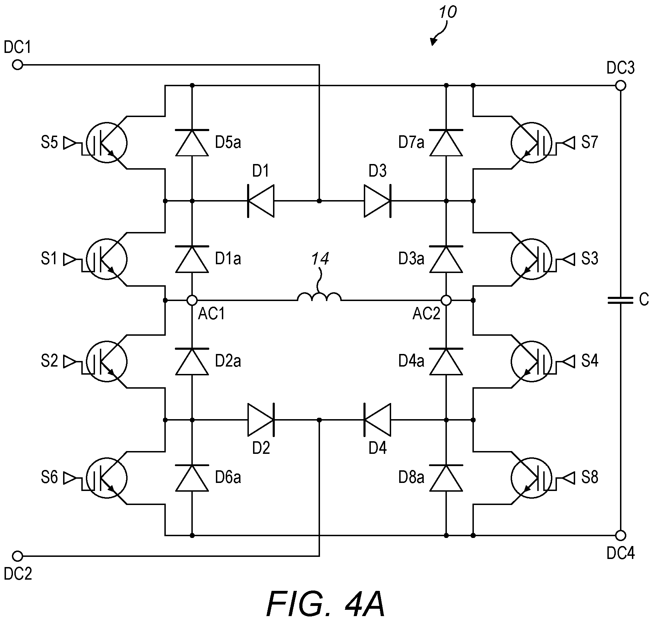

Referring to Figure 4A, an alternative switching module 10 according to the present invention includes an H-bridge circuit 12. The H-bridge circuit 12 includes:
- first and second AC bridge terminals AC1, AC2 electrically connectable to a respective coil 14,
- first and second DC bridge terminals DC1, DC2 electrically connectable to a DC current source or to a DC bridge terminal of another switching module,
- a first switch assembly electrically connected between the first AC bridge terminal AC1 and the first DC bridge terminal DC1, the first switch assembly comprising a first controllable semiconductor switch S1 and a first diode D1 electrically connected in series,
- a second switch assembly electrically connected between the first AC bridge terminal AC1 and the second DC bridge terminal DC2, the second switch assembly comprising a second controllable semiconductor switch S2 and a second diode D2 electrically connected in series,
- a third switch assembly electrically connected between the second AC bridge terminal AC2 and the first DC bridge terminal DC1, the third switch assembly comprising a third controllable semiconductor switch S3 and a third diode D3 electrically connected in series, and
- a fourth switch assembly electrically connected between the second AC bridge terminal AC2 and the second DC bridge terminal DC2, the fourth switch assembly comprising a fourth controllable semiconductor switch S4 and a fourth diode D4 electrically connected in series.

The first and second AC terminals AC1, AC2 of the switching module 10 are shown to be electrically connected to a single coil 14. But the switching module 10 may be electrically connected to two or more coils that are electrically connected in series or parallel.

The switching module 10 also includes an active clamp circuit 16 comprising:
- first and second DC clamp terminals DC3, DC4,
- a fifth controllable semiconductor switch S5 electrically connected between the first DC clamp terminal DC3 and a junction (or connecting point) between the first controllable semiconductor switch S1 and the first diode D1,
- a sixth controllable semiconductor switch S6 electrically connected between the second DC clamp terminal DC4 and a junction between the second controllable semiconductor switch S2 and the second diode D2,
- a seventh controllable semiconductor switch S7 electrically connected between the first DC clamp terminal DC3 and a junction between the third controllable semiconductor switch S3 and the third diode D3,
- an eighth controllable semiconductor switch S8 electrically connected between the second DC clamp terminal DC4 and a junction between the fourth controllable semiconductor switch S4 and the fourth diode D4, and
- an energy storage device (i.e., capacitor C) electrically connected between the first and second DC clamp terminals DC3, DC4.

A junction between the first and second controllable semiconductor switches S1, S2 defines the first AC bridge terminal AC1 and a junction between the third and fourth controllable semiconductor switches S3, S4 defines the second AC bridge terminal AC2.

The first controllable semiconductor switch S1 and the first diode D1 are electrically connected in series and arranged to conduct in the same direction. The first controllable semiconductor switch S1 is electrically connected to the first AC bridge terminal AC1 and the first diode D1 is electrically connected to the first DC bridge terminal DC1.

The second controllable semiconductor switch S2 and the second diode D2 are electrically connected in series and arranged to conduct in the same direction. The second controllable semiconductor switch S2 is electrically connected to the first AC bridge terminal AC1 and the second diode D2 is electrically connected to the second DC bridge terminal DC2.

The third controllable semiconductor switch S3 and the third diode D3 are electrically connected in series and arranged to conduct in the same direction. The third controllable semiconductor switch S3 is electrically connected to the second AC bridge terminal AC2 and the third diode D3 is electrically connected to the first DC bridge terminal DC1.

The fourth controllable semiconductor switch S4 and the fourth diode D4 are electrically connected in series and arranged to conduct in the same direction. The fourth controllable semiconductor switch S4 is electrically connected to the second AC bridge terminal AC2 and the fourth diode D4 is electrically connected to the second DC bridge terminal DC2.

All of the controllable semiconductor switches S1, S2, ..., S8 of the switching module are of the same type and have the same rating. In the switching module 10 shown in Figure 4A, all of the controllable semiconductor switches S1, S2, ..., S8 are IGBTs. Each IGBT is associated with an anti-parallel diode (i.e., the diodes D1a, D2a, ..., D8a). It will be understood that other controllable semiconductor switches may also be used.

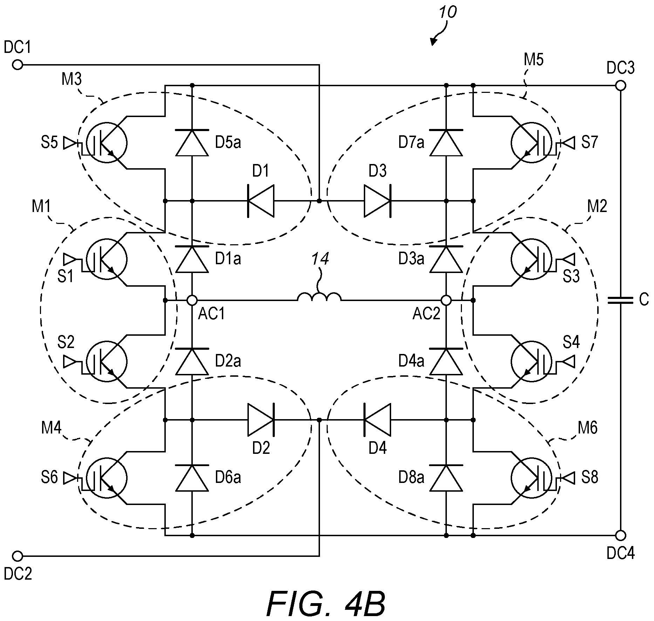

Referring to Figure 4B, the first and second controllable semiconductor switches S1, S2 are of the same type and are implemented as a first pre-packaged module M1 in which the first and second controllable semiconductor switches S1, S2 are arranged to conduct in the same direction. In other words, the first and second controllable semiconductor switches S1, S2 are implemented using the pair of controllable semiconductor switches that are packaged together in a conventional pre-packaged module.

The third and fourth controllable semiconductor switches S3, S4 are of the same type and are implemented as a second pre-packaged module M2 in which the third and fourth controllable semiconductor switches S3, S4 are arranged to conduct in the same direction. In other words, the third and fourth controllable semiconductor switches S3, S4 are implemented using the pair of controllable semiconductor switches that are packaged together in a conventional pre-packaged module.

The fifth controllable semiconductor switch S5 and the first diode D1 are implemented as a third pre-packaged module M3 in which the fifth controllable semiconductor switch S5 and the first diode D1 are electrically connected in anti-series, i.e., arranged to conduct in opposite directions. In other words, the fifth controllable semiconductor switch S5 and the first diode D1, despite the fact they are used for the active clamp circuit 16 and the H-bridge circuit 12, respectively, are implemented using the controllable semiconductor switch and diode that are packaged together in a conventional pre-packaged module.

The sixth controllable semiconductor switch S6 and the second diode D2 are implemented as a fourth pre-packaged module M4 in which the sixth controllable semiconductor switch S6 and the second diode D2 are electrically connected in anti-series, i.e., arranged to conduct in opposite directions. In other words, the sixth controllable semiconductor switch S6 and the second diode D2, despite the fact that they are used for the active clamp circuit 16 and the H-bridge circuit 12, respectively, are implemented using the controllable semiconductor switch and diode that are packaged together in a conventional pre-packaged module.

The seventh controllable semiconductor switch S7 and the third diode D3 are implemented as a fifth pre-packaged module M5 in which the seventh controllable semiconductor switch S7 and the third diode D3 are electrically connected in anti-series, i.e., arranged to conduct in opposite directions. In other words, the seventh controllable semiconductor switch S7 and the third diode D3, despite the fact they are used for the active clamp circuit 16 and the H-bridge circuit 12, respectively, are implemented using the controllable semiconductor switch and diode that are packaged together in a conventional pre-packaged module.

The eighth controllable semiconductor switch S8 and the fourth diode D4 are implemented as a sixth pre-packaged module M6 in which the eighth controllable semiconductor switch S8 and the fourth diode D4 are electrically connected in anti-series, i.e., arranged to conduct in opposite directions. In other words, the eighth controllable semiconductor switch S8 and the fourth diode D4, despite the fact they are used for the active clamp circuit 16 and the H-bridge circuit 12, respectively, are implemented using the controllable semiconductor switch and diode that are packaged together in a conventional pre-packaged module.

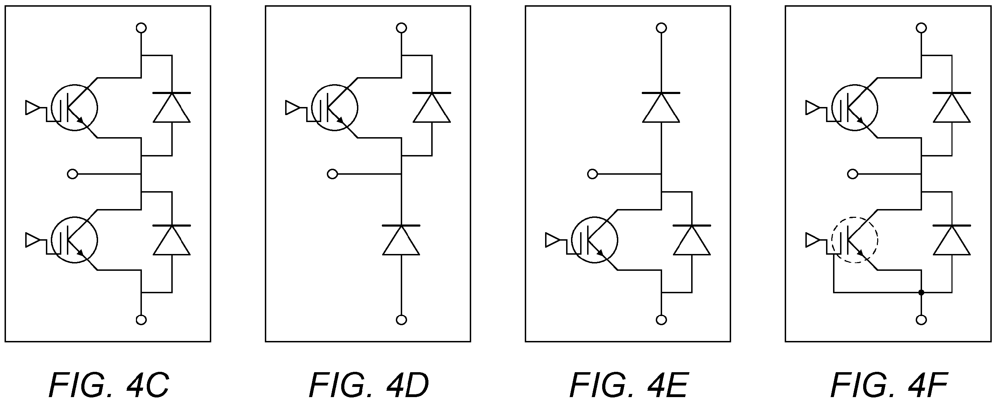

In this arrangement, six conventional or "off the shelf" pre-packaged modules are needed to implement a switching module. The first and second pre-packaged modules M1, M2 may be half-bridge modules, for example. An example of a half-bridge module is shown in Figure 4C with a pair of IGBTs and anti-parallel diodes electrically connected in series and arranged to conduct in the same direction. Alternatively, as described above, the first, second, third and fourth controllable switches S1, S2, ..., S4 may be implemented using a single pre-packaged module that has two pairs of controllable semiconductors that define two legs provided the leg terminals not electrically connected together (e.g., the DC terminals are not connected to each other). The third, fourth, fifth and sixth pre-packaged modules M3, M4, ..., M6 may be chopper modules where each chopper module comprises a controllable semiconductor switch (e.g., an IGBT and anti-parallel diode) electrically connected in anti-series with a diode. An example of chopper modules is shown in Figures 4D and 4E with an IGBT and anti-parallel diode electrically connected in anti-series with a diode. The IGBT and the diode are arranged to conduct in opposite directions. The third and fifth pre-packaged modules M3, M5 may be implemented using the chopper module shown in Figure 4D and the fourth and sixth prepackaged modules M4, M6 may be implemented using the chopper module shown in Figure 4E.

The third, fourth, fifth and sixth pre-packaged modules M3, M4, ..., M6 may also be half-bridge modules as shown in Figure 4C but where one of the pair of IGBTs is disabled thereby making that switch redundant without affecting the respective anti-parallel diode. This is shown in Figure 4F where one of the IGBTs is ghosted to indicate that it is redundant. It may be seen that gate and emitter terminals of the ghosted IGBT are shorted. This would allow the switching module 10 to be implemented using six (or fewer) identical pre-packaged half-bridge modules - where for the third, fourth, fifth and sixth pre-packaged modules M3, M4, ..., M6 only one of the IGBTs is switched on and off. The other IGBT is disabled, but where current may still flow through its respective anti-parallel diode.

Implementing the H-bridge circuit and the active clamp circuit with MOSFETs as shown in Figures 2 and 3A-3C would minimise conduction losses. Using IGBTs as shown in Figures 4A-4F may be less expensive, but the switching module would have higher conduction losses. Both arrangements using MOSFETs or IGBTs would require a total of six (or fewer) pre-packaged modules M1, M2, ..., M6.

Although the following description refers to a switching module 10 that uses IGBTs, it will be understood that other types of controllable semiconductor switches may be used, e.g., the MOSFETs shown in Figures 2 and 3A-3B.

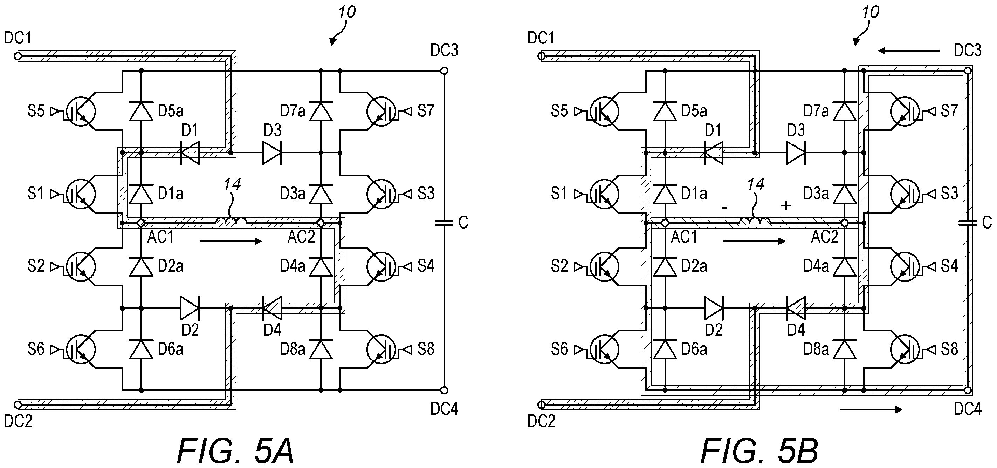

A coil commutation process of the switching module 10 implemented using IGBTs is described with reference to Figures 5A-5F.

In a first phase shown in Figure 5A, *I_{coil} = +I_{dc}* where *I_{coil}* is the coil current, and *I_{dc}* is the DC current supplied by a DC current source, e.g., the DC current source 56 described below. The first and fourth controllable semiconductor switches S1, S4 are switched on. All other controllable semiconductor switches are switched off. Current flows through the coil 14 in the direction shown by the arrow in Figure 5A - i.e., from the first DC bridge terminal DC1 through the first diode D1, the first controllable semiconductor switch S1, the coil 14, the fourth controllable semiconductor switch S4, and the fourth diode D4, to the second DC bridge terminal DC2.

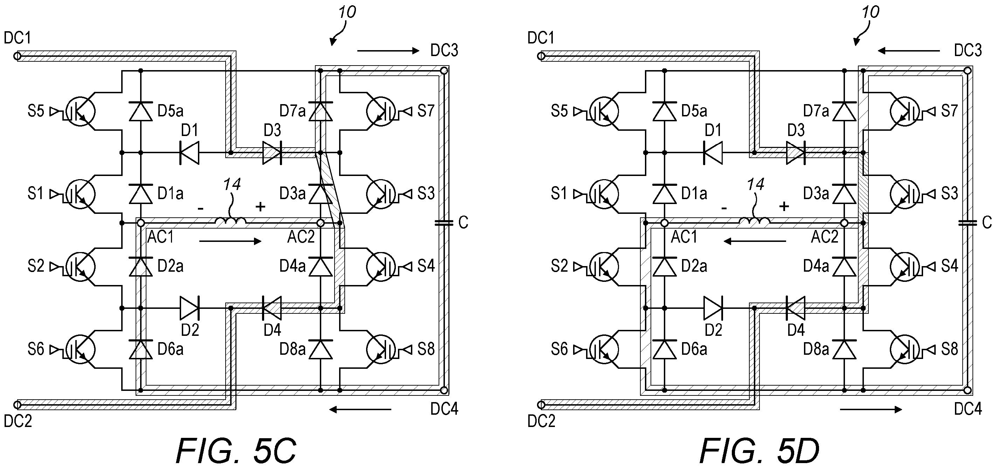

In a second phase shown in Figure 5B, the first and fourth controllable semiconductor switches S1, S4 remain switched on. The second, third, sixth and seventh controllable semiconductor switches S2, S3, S6 and S7 are switched on. This imposes a negative voltage across the coil 14. *V_{coil}* = *-V_{clamp}* where *V_{coil}* is the coil voltage, and *V_{clamp}* is the DC voltage across the capacitor C of the active clamp circuit 16 (i.e., the capacitor voltage). The coil current starts to reduce and the capacitor C discharges. When the coil current reaches a threshold (e.g., *I_{coil} = +I_{dc}*/2) the process transitions to the third phase shown in Figure 5C.

In the third phase, the first controllable semiconductor switch S1 is switched off. The second, third, fourth, sixth and seventh controllable semiconductor switches S2, S3, S4, S6 and S7 remain switched on. This maintains the negative voltage across the coil 14. The coil current continues to reduce and approaches zero. The capacitor C charges. When the coil current reaches zero the process transitions to the fourth phase shown in Figure 5D.

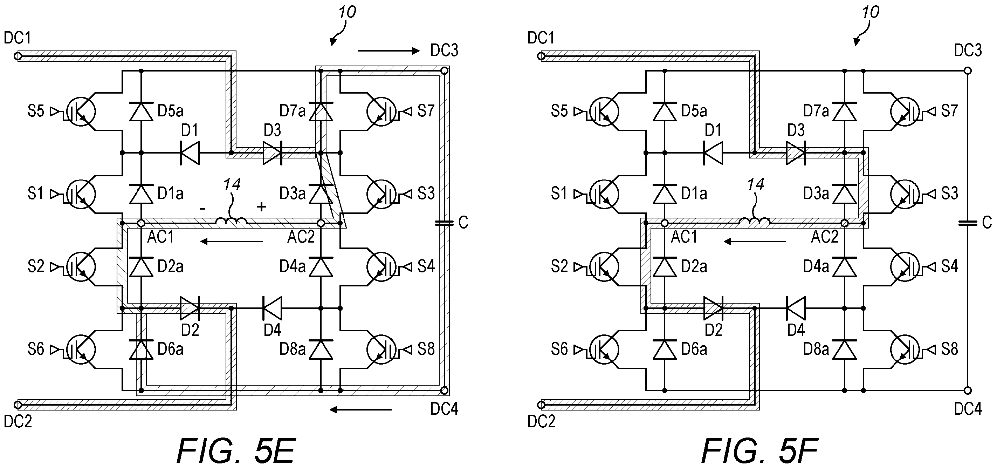

In the fourth phase, the second, third, fourth, sixth and seventh controllable semiconductor switches S2, S3, S4, S6 and S7 remain switched on. This maintains the negative voltage across the coil 14. The coil current, which is now negative, continues to become more negative. The capacitor C discharges. When the coil current reaches a threshold (e.g., *I_{coil} = -I_{dc}*/2) the process transitions to the fifth phase shown in Figure 5E.

In the fifth phase, the fourth controllable semiconductor switch S4 is switched off. The second, third, sixth and seventh controllable semiconductor switches S2, S3, S6 and S7 remain switched on. This maintains the negative voltage across the coil 14. The coil current continues to become more negative and approaches *-I_{dc}.* The capacitor C charges. When the coil current reaches *-I_{dc}* the process transitions to the sixth phase shown in Figure 5F. Although the sixth and seventh switches S6, S7 may remain switched on until the end of the fifth phase, they may also be switched off during the fifth phase because their anti-parallel diodes D6a, D7a will carry the current. The advantage of switching the sixth and seventh switches S6, S7 off during the fifth phase is that the fifth phase finishes automatically when the coil current reaches *-I_{dc}* and if the switches remain switched on there is a risk that the coil current will exceed *-I_{dc},* i.e., the coil current may overshoot.

In the sixth phase, *I_{coil} = -I_{dc}* (i.e., the coil current has been commutated from *+I_{dc}* to *-I_{dc}* ) and the second and third semiconductor switches S2, S3 remain switched on.

The net charge into or out of the capacitor C during the coil commutation process will be determined by the duration of each of the second to fifth phases. The total duration of these will remain the same for a given clamp voltage, DC current, and coil inductance. However, the timings of the transitions between the second and third phases, and between the fourth and fifth phases, will determine the net capacitor charge, and hence the change in the capacitor voltage. For example, if the second and fourth phases because shorter, with the third and fifth phases becoming longer by the same amount, there will be a net charge into the capacitor C and the capacitor voltage at the end of the coil commutation process will be greater than at the start of the coil commutation process. The phase durations may be adjusted, for example, by adjusting the coil current thresholds that trigger the end of each phase.

Although not shown, a corresponding coil commutation process may be used to commutate the coil current from *-I_{dc}* to *+I_{dc}.* In particular, in a first phase, *I_{coil} = -I_{dc}.* The second and third controllable semiconductor switches S2, S3 are switched on. All other controllable semiconductor switches are switched off. Current flows through the coil 14 from the first DC bridge terminal DC1 through the third diode D3, the third controllable semiconductor switch S3, the coil 14, the second controllable semiconductor switch S2, and the second diode D2, to the second DC bridge terminal DC2.

In a second phase, the second and third controllable semiconductor switches S2, S3 remain switched on. The first, fourth, fifth and eighth controllable semiconductor switches S1, S4, S5 and S8 are switched on. This imposes a positive voltage across the coil 14. *V_{coil} = +V_{clamp}.* The coil current starts to become less negative and the capacitor C discharges. When the coil current reaches a threshold (e.g., *I_{coil} = -I_{dc}*/2) the process transitions to the third phase.

In the third phase, the third controllable semiconductor switch S3 is switched off. The first, second, fourth, fifth and eighth controllable semiconductor switches S1, S2, S4, S5 and S8 remain switched on. This maintains the positive voltage across the coil 14. The coil current continues to become less negative and approaches zero. The capacitor C charges. When the coil current reaches zero the process transitions to the fourth phase.

In the fourth phase, the first, second, fourth, fifth and eighth controllable semiconductor switches S1, S2, S4, S5 and S8 remain switched on. This maintains the positive voltage across the coil 14. The coil current, which is now positive, continues to increase. The capacitor C discharges. When the coil current reaches a threshold (e.g., *I_{coil} = +I_{ac}*/2) the process transitions to the fifth phase.

In the fifth phase, the second controllable semiconductor switch S2 is switched off. The first, fourth, fifth and eighth controllable semiconductor switches S1, S4, S5 and S8 remain switched on. This maintains the positive voltage across the coil 14. The coil current continues to increase and approaches *+I_{dc}.* The capacitor C charges. When the coil current reaches *+I_{dc}* the process transitions to the sixth phase. Although the fifth and eighth switches S5, S8 may remain switched on until the end of the fifth phase, they may also be switched off during the fifth phase because their anti-parallel diodes D5a, D8a will carry the current. The advantage of switching the fifth and eighth switches S5, S8 off during the fifth phase is that the fifth phase finishes automatically when the coil current reaches *+I_{dc}* and if the switches remain switched on there is a risk that the coil current will exceed *+I_{dc},* i.e., the coil current may overshoot.

In the sixth phase, *I_{coil} = +I_{dc}* (i.e., the coil current has been commutated from *-I_{dc}* to *+I_{dc}* ) and the first and fourth semiconductor switches S1, S4 remain switched on.

If the switching module 10 is implemented using MOSFETs, the MOSFETs may need to be switched off just before the current stops flowing through the respective anti-parallel diode and switched on just after the current has started flowing through the respective anti-parallel diode. In other words, it is normally necessary to add deadtime to the coil commutation process to avoid short circuiting the capacitor C of the active clamp circuit 16. For example, in the third phase shown in Figure 5C, but implemented using MOSFETs instead of IGBTs, it is necessary to switch off the ninth controllable semiconductor switch S9 immediately before switching off the first controllable semiconductor switch S1. Switching off the first controllable semiconductor switch S1 causes the body diode of the eleventh controllable semiconductor switch S11 to be switched on. The eleventh controllable semiconductor switch S11 is therefore switched on immediately after the first controllable semiconductor switch S1 is switched off.

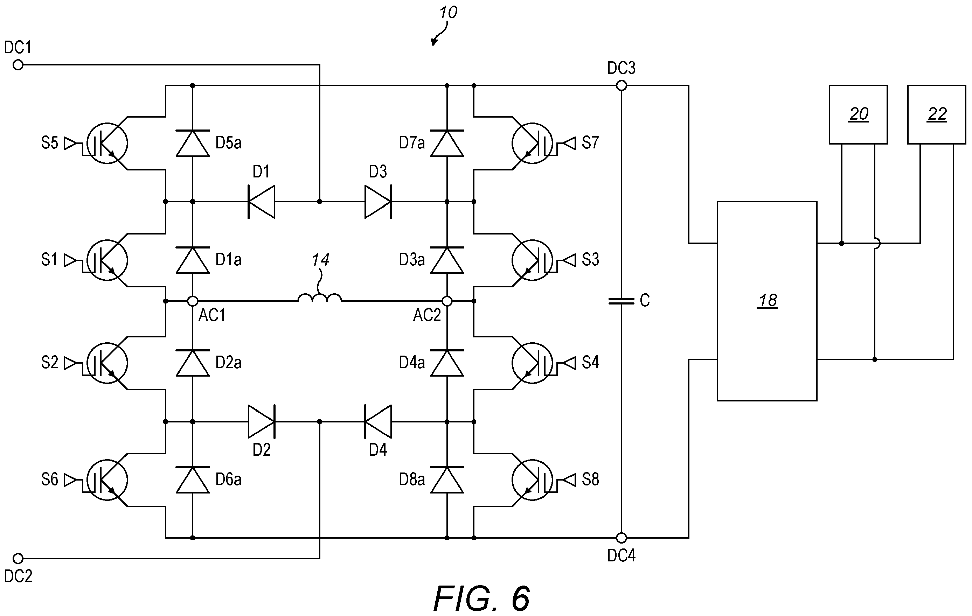

The switching module 10 may be associated with one or more electronic circuits, e.g., a control circuit, gate driver circuits for driving the controllable semiconductor switches etc. The electronic circuits may communicate with a main controller by a fibre-optic link or other galvanically-isolated communication channel, for example. The electronic circuits will typically require a power supply. In one arrangement, power for the electronic circuits may be provided by the capacitor C of the switching module 10 instead of being supplied by a separate power supply. Referring to Figure 6, the switching module 10 may therefore comprise a power supply circuit 18 (e.g., a low voltage power supply circuit) electrically connected between the first and second DC clamp terminals DC3, DC4 in parallel with the capacitor C. The power supply circuit 18 is electrically connectable to the one or more local electronic circuits 20, 22. The power supply circuit may be a power converter, e.g., a step-down power converter to derive a suitable output voltage from the capacitor voltage. A suitable power converter may be a DC/DC power converter such as a forward converter or flyback converter, for example. The capacitor C may be charged by a DC current source through the first and second DC bridge terminals DC1, DC2 or by a current that is induced in the coil 14 that is electrically connected to the first and second AC bridge terminals AC1, AC2, where in the latter case the induced current will flow through one or more semiconductor devices of the H-bridge circuit 12 and the active clamp circuit 16. Once the capacitor C has been charged, e.g., by carrying out a pre-charge process, the power supply circuit 18 may be used to provide power to the one or more electronic circuits 20, 22 associated with the switching module 10.

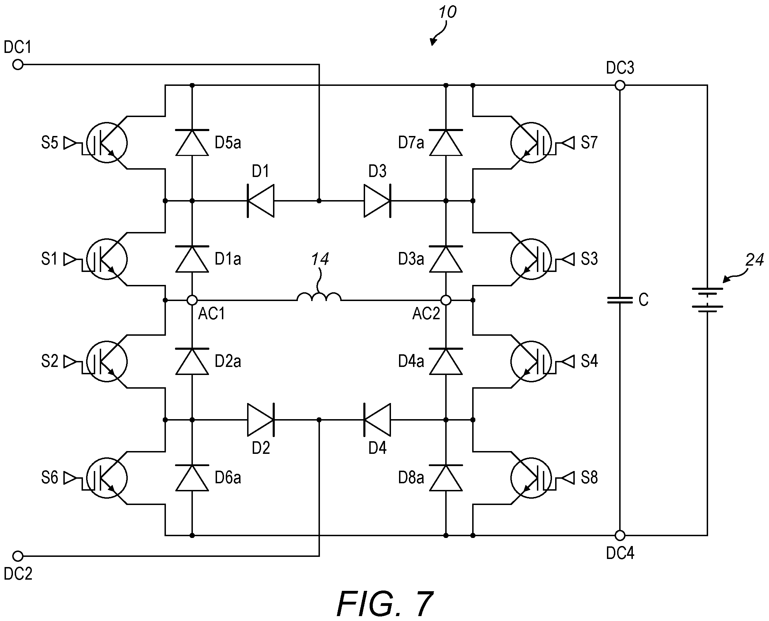

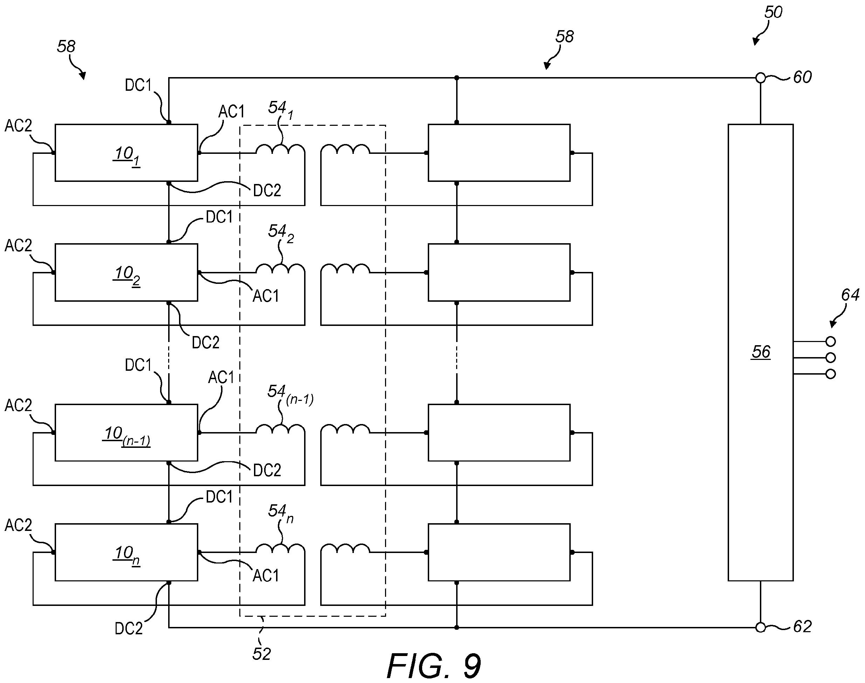

Referring to Figure 7, the switching module 10 may further comprise a battery 24 (or a battery bank comprising a plurality of electrically connected batteries) electrically connected between the first and second DC clamp terminals DC3, DC4 in parallel with the capacitor C. Integrating additional energy storage beyond what is needed for energy recovery may provide a distributed energy storage network for a power electronic switching assembly that comprises a plurality of electrically connected switching modules. The battery voltage and the state of charge (SoC) of the battery 24 may be controlled by the active clamp circuit 16. The active clamp circuit 16 may be designed to match the battery voltage range across the allowable variation of the SoC of the battery 24. In some situations, the battery 24 may also be used to absorb excess power induced in the coil 14 electrically connected to the first and second AC bridge terminals AC1, AC2, e.g., during an overspeed condition of a DC electrical machine that includes a plurality of switching modules and where each switching module is electrically connected to a stator coil of the DC electrical machine. An example of a DC electrical machine is described below with reference to Figure 9.

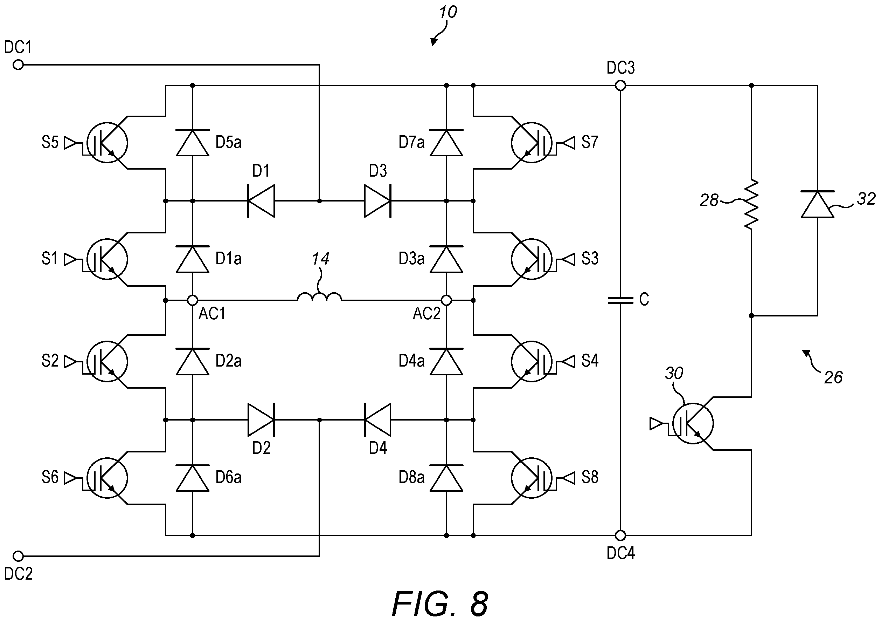

Referring to Figure 8, the switching module 10 may further comprise a dynamic braking system 26 electrically connected between the first and second DC clamp terminals DC3, DC4 in parallel with the capacitor C. The dynamic braking system 26 may be of any suitable type. For example, as shown in Figure 8, the dynamic braking system 26 includes a braking resistor 28 and a controllable semiconductor switch 30 electrically connected in series between the first and second DC clamp terminals DC3, DC4. The dynamic braking system 26 also includes a diode 32 electrically connected in parallel with the braking resistor 28. The dynamic braking system 26 may be used to provide short-term power dissipation, e.g., during an overspeed condition of a DC electrical machine.

Referring to Figure 9, a DC electrical machine 50 includes:
- a stator 52 with a plurality of stator coils 54₁, 54₂, ..., 54ₙ, where n is an integer greater than or equal to two,
- a rotor (not shown),
- a DC current source 56, and
- a power electronic switching assembly 58.

The power electronic switching assembly 58 includes n switching modules 10₁, 10₂, ..., 10ₙ as described above. It will be understood that the power electronic switching assembly 58 may also be implemented using the switching modules shown in Figures 2, 3A and 3B where the controllable semiconductor switches are MOSFETs, or the switching modules shown in Figures 4A and 4B where the controllable semiconductor switches are IGBTs. Switching modules implemented using other types of controllable semiconductor switches may also be used.

The first and second AC bridge terminals AC1, AC2 of each switching module 10₁, 10₂, ..., 10ₙ are electrically connected to a respective stator coil 54₁, 54₂, ..., 54ₙ. The first DC bridge terminal DC1 of a first switching module 10₁ is electrically connected to a first DC terminal 60 of the DC current source 56, the second DC bridge terminal DC2 of an nth switching module 10ₙ is electrically connected to a second DC terminal 62 of the DC current source 56, and the first and second DC bridge terminals DC1, DC2 of the remaining switching modules are electrically connected in series. For example, the second DC bridge terminal DC2 of the first switching module 10₁ is electrically connected to the first DC bridge terminal DC1 of the second switching module 10₂, the second DC bridge terminal DC2 of the second switching module 10₂ is electrically connected to the first DC bridge terminal of a third switching module, and so on, until the second DC bridge terminal DC2 of the (n-1)th switching module 10₍ₙ₋₁₎ is electrically connected to the first DC bridge terminal DC1 of the nth switching module 10ₙ. Put another way, the switching modules 10₁, 10₂, ..., 10ₙ may be electrically connected with a series chain link structure between the first and second DC terminals 60, 62 of the DC current source 56 as shown in Figure 9.

Figure 9 also shows a second set of switching modules connected with a series chain link structure between the first and second DC terminals of the DC current source 56 in parallel with the first set of switching modules 10₁, 10₂, ..., 10ₙ. In practice, three or more sets of switching modules connected with a series chain link structure may be electrically connected in parallel between the first and second DC terminals of the DC current source 56.

The stator coils 54₁, 54₂, ..., 54ₙ, may be received in slots formed in the stator 52. The stator coils 54₁, 54₂, ..., 54ₙ, may be of any suitable type (e.g., single-layer, two-layer etc.) and may be arranged around the stator to have any suitable winding topology. The rotor (not shown) rotates relative to the stationary stator 52 and is spaced apart from the stator 52 by an airgap. As described above, the rotor (not shown) may have any suitable construction.

The DC current source 56 shown in Figure 9 is a power converter, e.g., an AC/DC power converter having first and second DC terminals 60, 62 that are electrically connected to the first and nth switching modules 10₁, 10ₙ of the power electronic switching assembly 58, and three AC terminals 64 that are electrically connected to an AC circuit or power grid (e.g., a three-phase power grid). Although not shown, the DC current source may also be another DC electrical machine, e.g., a generator that provides a DC output voltage. The DC electrical machine 50 may be operated as a motor or generator. In particular, power may be supplied from the DC current source 56 to the switching modules 10₁, 10₂, ..., 10, to drive the rotor (not shown) or the rotor may be driven to rotate (e.g., by a prime mover) and power may be generated in the stator coils 54₁, 54₂, ..., 54ₙ and supplied from the switching modules 10₁, 10₂, ..., 10ₙ to the DC current source 56. Other DC current sources may also be used.

Each switching module 10₁, 10₂, ..., 10ₙ may further comprise a controller (not shown) adapted to commutate the respective switching module according to a coil commutation process (i.e., where the current flowing through the stator coil 54₁, 54₂, ..., 54ₙ reverses repeatedly when the DC electrical machine 50 is operating). Alternatively, one or more controllers may be associated with two or more switching modules and each controller is adapted to commutate the switching modules according to a respective coil commutation process. The stator coil 54₁, 54₂, ..., 54ₙ of each switching module 10₁, 10₂, ..., 10ₙ may be commutated and the respective coil commutation processes may be interleaved. The stator coils 54₁, 54₂, ..., 54ₙ of the DC electrical machine 50 may be arranged around the stator 52 in order to provide a plurality of phase-shifted coil voltages - typically having a plurality of phases. For example, a DC electrical machine 50 having p phases might include at least a first group of p stator coils whose EMFs are phase-displaced from one another by 360/p⁰, wherein p is an integer greater than or equal to two, one cycle of stator fundamental frequency occupies 360⁰, and each EMF experiences two zero crossings per cycle. The DC electrical machine 50 may have any convenient number of stator coils (i.e., n may be any suitable number) and may therefore have a larger number of phases with small phase-displacements between EMFs. The number of coil commutation events per cycle of stator fundamental frequency is equal to twice the number of phases, hence successive coil commutations become interleaved. Several overlapping coil commutation events may be in progress at any given time.

The timing parameters of each coil commutation event may be varied or adjusted in order to provide closed loop control of the voltage across the capacitor C of the active clamp circuit 16 of the respective switching module 10₁, 10₂, ..., 10ₙ.

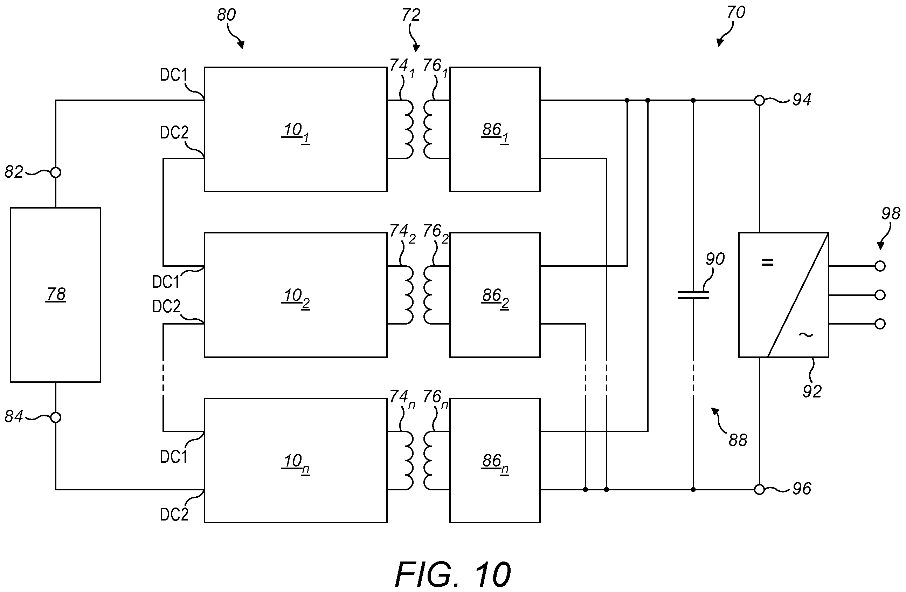

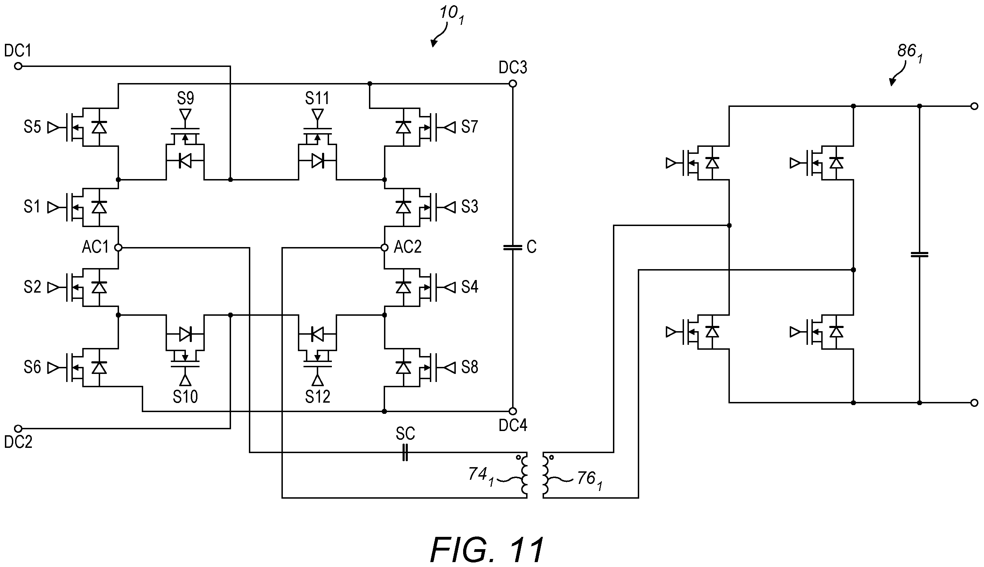

Referring to Figures 10 and 11, a power converter 70 includes:
- a transformer assembly 72 with a plurality of first coils 74₁, 74₂, ..., 74n and a plurality of second coils 76₁, 76₂, ..., 76ₙ that are coupled,
- a DC current source 78, and
- a power electronic switching assembly 80.

The power electronic switching assembly 80 includes n switching modules 10₁, 10₂, ..., 10ₙ as described above. It will be understood that the power electronic switching assembly 80 may also be implemented using the switching modules shown in Figures 2, 3A and 3B where the controllable semiconductor switches are MOSFETs, or the switching modules shown in Figures 4A and 4B where the controllable semiconductor switches are IGBTs. Switching modules implemented using other types of controllable semiconductor switches may also be used. Figure 11 shows a switching module implemented using MOSFETs as an example.

The first and second AC bridge terminals AC1, AC2 of each switching module 10₁, 10₂, ..., 10ₙ are electrically connected to a respective first coil 74₁, 74₂, 74ₙ of the transformer assembly 72. Figure 11 shows an optional series capacitor SC connected between the first AC terminal AC1 of the switching module 10₁ and the respective first coil 74₁. The first DC bridge terminal DC1 of the first switching module 10₁ is electrically connected to a first DC terminal 82 of the DC current source, the second DC bridge terminal DC2 of the nth switching module 10ₙ is electrically connectable to a second DC terminal 84 of the DC current source 78, and the first and second DC bridge terminals DC1, DC2 of the remaining switching modules are electrically connected in series. For example, the second DC bridge terminal DC2 of the first switching module 10₁ is electrically connected to the first DC bridge terminal DC1 of the second switching module 10₂, the second DC bridge terminal DC2 of the second switching module 10₂ is electrically connected to the first DC bridge terminal DC1 of a third switching module, and so on, until the second DC bridge terminal DC2 of an (n-1)th switching module is electrically connected to the first DC bridge terminal DC1 of the nth switching module 10ₙ. Put another way, the switching modules 10₁, 10₂, ..., 10ₙ may be electrically connected with a series chain link structure between the first and second DC terminals 82, 84 of the DC current source 78 as shown in Figure 10.

Each switching module 10₁, 10₂, ..., 10ₙ may function as a DC/AC power converter with an output current waveform being generated in each first coil 74₁, 74₂, ..., 74ₙ. For example, to generate a positive voltage in the respective first coil, the first, fourth, fifth and eighth controllable semiconductor switches S1, S4, S5 and S8 of the switching module may be switched on while the remaining controllable semiconductor switches are switched off. To generate a negative voltage in the respective first coil, the second, third, sixth and seventh controllable semiconductor switches S2, S3, S6 and S7 of the switching module may be switched on while the remaining controllable semiconductor switches are switched off. The output current waveforms may have any suitable frequency, e.g., about 1-10 kHz or higher. This allows the size of the transformer assembly 72 to be minimised and a high power density to be achieved.

More particularly, to generate a positive voltage in the respective first coil, the first, fourth, fifth and eighth controllable semiconductor switches S1, S4, S5 and S8 may be switched on. While in this state, one of the second and third controllable semiconductor switches S2, S3 may be switched on to short circuit the DC current source (state A). If neither of the second and third controllable semiconductor switches S2, S3 are switched on (state B) the voltage at the DC current source equals the clamp voltage.

To generate a negative voltage in the respective first coil, the second, third, sixth and seventh controllable semiconductor switches S2, S3, S6 and S7 may be switched on. While in this state, one of the first and fourth controllable semiconductor switches S1, S4 may be switched on to short circuit the DC current source (state C). If neither of the first and fourth controllable switches S1, S4 are switched on (state D) the voltage at the DC current source equals the clamp voltage.

The voltage at the DC current source is therefore a square wave with amplitude equal to the clamp voltage. The average voltage is set by the duty ratio of states A and B, and by the duty ratio of states C and D. The switching pattern applied - including for the ninth, tenth, eleventh and twelfth controllable semiconductor switches S9, S10, ..., S12 - may be chosen optimally to minimise the number of switching events and, by controlling the average DC input voltage, to regulate the power into the circuit from the DC current source.

Each second coil 76₁, 76₂, ..., 76ₙ is electrically connected to a respective AC/DC power converter 86₁, 86₂, ..., 86ₙ. Any suitable AC/DC power converter may be used. For example, as shown in Figure 10 each AC/DC power converter 86₁, 86₂, ..., 86ₙ has two AC terminals that are electrically connected to the respective second coil 76₁, 76₂, ..., 76ₙ, and two DC terminals that are electrically connected to a DC circuit 88. The DC circuit 88 includes a capacitor 90. Other arrangements of AC/DC power converters 86₁, 86₂, ..., 86ₙ may be used and they may be electrically connected in different ways, e.g., where the AC/DC power converters are electrically connected in series, parallel or series-parallel, for example.

If an AC output voltage is required, it may be derived from the DC circuit 88 using any suitable DC/AC power converter 92. For example, as shown in Figure 10, the DC/AC power converter 92 has two DC terminals 94, 96 that are electrically connected to the DC circuit 88 and three AC terminals 98 that provide the desired AC output voltage at a desired frequency (e.g., 60 Hz).

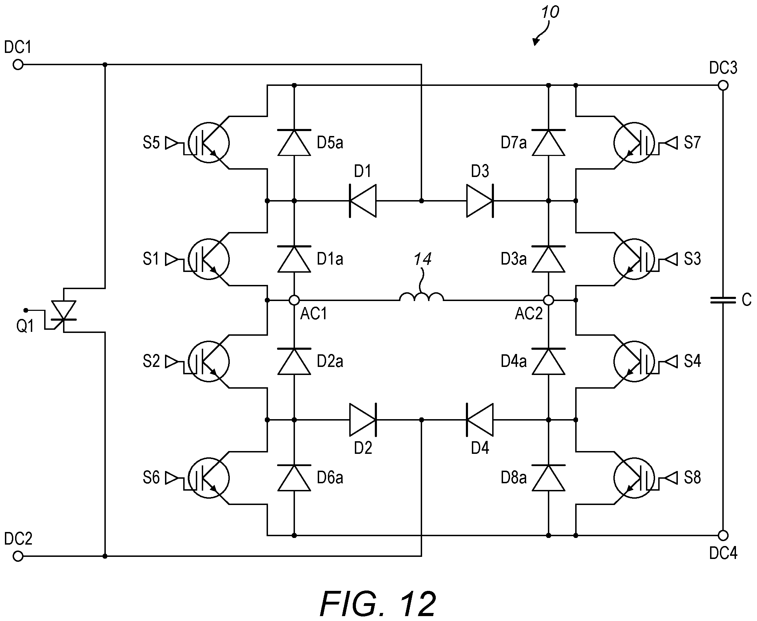

A switching module 10₁, 10₂, ..., 10ₙ of a power electronic switching assembly (e.g., the power electronic switching assembly 58 shown in Figure 9, or the power electronic switching assembly 80 shown in Figure 10) may be bypassed in the event of a fault in the H-bridge or active clamp circuits. Referring to Figure 12, a bypass switch Q1 (e.g., a mechanical switch or a controllable semiconductor switch) may be electrically connected between the first and second DC bridge terminals DC1, DC2 of each switching module 10. The bypass switch Q1 will normally be switched off (or it will normally be open so as to not allow current to flow through the bypass circuit between the first and second DC bridge terminals) but may be selectively switched on (or closed) to bypass the H-bridge circuit 12. This allows the power electronic switching assembly to continue to operate, perhaps at a slightly reduced rating, if one or more of the switching modules have failed and need to be bypassed. Instead of applying a direct short circuit across the first and second DC bridge terminals DC1, DC2 the bypass switch Q1 may also be electrically connected in series with an energy absorbing device (not shown) such as varistor or capacitor, for example. This may be beneficial in certain applications where a direct short circuit may not be advisable.

## Claims

1. A switching module (1; 10) comprising:
an H-bridge circuit (2; 12) comprising:
first and second AC bridge terminals (AC1, AC2) electrically connectable to a respective coil (4; 14),
first and second DC bridge terminals (DC1, DC2) electrically connectable to a DC current source (56; 78) or to a DC bridge terminal of another switching module,
a first switch assembly electrically connected between the first AC bridge terminal (AC1) and the first DC bridge terminal (DC1), the first switch assembly comprising a first controllable semiconductor switch (S1) and a first semiconductor device (S9; D1) electrically connected in series,
a second switch assembly electrically connected between the first AC bridge terminal (AC1) and the second DC bridge terminal (DC2), the second switch assembly comprising a second controllable semiconductor switch (S2) and a second semiconductor device (S10; D2) electrically connected in series,
a third switch assembly electrically connected between the second AC bridge terminal (AC2) and the first DC bridge terminal (DC1), the third switch assembly comprising a third controllable semiconductor switch (S3) and a third semiconductor device (S11; D3) electrically connected in series, and
a fourth switch assembly electrically connected between the second AC bridge terminal (AC2) and the second DC bridge terminal (DC2), the fourth switch assembly comprising a fourth controllable semiconductor switch (S4) and a fourth semiconductor device (S12; D4) electrically connected in series; and
an active clamp circuit (6; 16) comprising:
first and second DC clamp terminals (DC3, DC4),
a fifth controllable semiconductor switch (S5) electrically connected between the first DC clamp terminal (DC3) and a junction between the first controllable semiconductor switch (S1) and the first semiconductor device (S9; D1),
a sixth controllable semiconductor switch (S6) electrically connected between the second DC clamp terminal (DC4) and a junction between the second controllable semiconductor switch (S2) and the second semiconductor device (S10; D2),
a seventh controllable semiconductor switch (S7) electrically connected between the first DC clamp terminal (DC3) and a junction between the third controllable semiconductor switch (S3) and the third semiconductor device (S11; D3),
an eighth controllable semiconductor switch (S8) electrically connected between the second DC clamp terminal (DC4) and a junction between the fourth controllable semiconductor switch (S4) and the fourth semiconductor device (S12; D4), and
an energy storage device (C) electrically connected between the first and second DC clamp terminals (DC3, DC4).

2. A switching module (1) according to claim 1, wherein the first semiconductor device is a ninth controllable semiconductor switch (S9), the second semiconductor device is a tenth controllable semiconductor switch (S10), the third semiconductor device is an eleventh controllable semiconductor switch (S11), and the fourth semiconductor device is a twelfth controllable semiconductor switch (S12).

3. A switching module (1) according to claim 2, wherein:
the first and second controllable semiconductor switches (S1, S2) are of the same type, and are implemented as a pre-packaged module (M1) in which the first and second controllable semiconductor switches (S1, S2) are arranged to conduct in the same direction,
the third and fourth controllable semiconductor switches (S3, S4) are of the same type, and are implemented as a pre-packaged module (M2) in which the third and fourth controllable semiconductor switches (S3, S4) are arranged to conduct in the same direction,
the fifth and ninth controllable semiconductor switches (S5, S9) are of the same type, and are implemented as a pre-packaged module (M3) in which the fifth and ninth controllable semiconductor switches (S5, S9) are arranged to conduct in the same direction,
the sixth and tenth controllable semiconductor switches (S6, S10) are of the same type, and are implemented as a pre-packaged module (M4) in which the sixth and tenth controllable semiconductor switches (S6, S10) are arranged to conduct in the same direction,
the seventh and eleventh controllable semiconductor switches (S7, S11) are of the same type, and are implemented as a pre-packaged module (M5) in which the seventh and eleventh controllable semiconductor switches (S7, S11) are arranged to conduct in the same direction, and
the eighth and twelfth controllable semiconductor switches (S8, S12) are of the same type, and are implemented as a pre-packaged module (M6) in which the eighth and twelfth controllable semiconductor switches (S8, S12) are arranged to conduct in the same direction.

4. A switching module (1) according to claim 1 or claim 2, wherein all of the controllable semiconductor switches (S1, S2, ..., S12) of the H-bridge circuit (2) and the active clamp circuit (6) are MOSFETs.

5. A switching module according to claim 4, wherein:
the first and ninth controllable semiconductor switches (S1, S9) are electrically connected in anti-series in a common drain configuration,
the second and tenth controllable semiconductor switches (S2, S10) are electrically connected in anti-series in a common source configuration,
the third and eleventh controllable semiconductor switches (S3, S11) are electrically connected in anti-series in a common drain configuration, and
the fourth and twelfth controllable semiconductor switches (S4, S12) are electrically connected in anti-series in a common source configuration.

6. A switching module (10) according to claim 1, wherein the first semiconductor device is a first diode (D1), the second semiconductor device is a second diode (D2), the third semiconductor device is a third diode (D3), and the fourth semiconductor device is a fourth diode (D4).

7. A switching module (10) according to claim 6, wherein:
the first and second controllable semiconductor switches (S1, S2) are of the same type, and are implemented as a pre-packaged module (M1) in which the first and second controllable semiconductor switches (S1, S2) are arranged to conduct in the same direction, and
the third and fourth controllable semiconductor switches (S3, S4) are of the same type, and are implemented as a pre-packaged module (M2) in which the third and fourth controllable semiconductor switches (S3, S4) are arranged to conduct in the same direction,
the fifth controllable semiconductor switch (S5) and the first diode (D1) are implemented as a pre-packaged module (M3) in which the fifth controllable semiconductor switch (S5) and the first diode (D1) are electrically connected in anti-series and arranged to conduct in opposite directions,
the sixth controllable semiconductor switch (S6) and the second diode (D2) are implemented as a pre-packaged module (M4) in which the sixth controllable semiconductor switch (S6) and the second diode (D2) are electrically connected in anti-series and arranged to conduct in opposite directions,
the seventh controllable semiconductor switch (D7) and the third diode (D3) are implemented as a pre-packaged module (M5) in which the seventh controllable semiconductor switch (S7) and the third diode (D3) are electrically connected in anti-series and arranged to conduct in opposite directions, and
the eighth controllable semiconductor switch (S8) and the fourth diode (D4) are implemented as a pre-packaged module (M6) in which the eighth controllable semiconductor switch (S8) and the fourth diode (D4) are electrically connected in anti-series and arranged to conduct in opposite directions.

8. A switching module (10) according to claim 6 or claim 7, wherein all of the controllable semiconductor switches (S1, S2, ..., S8) of the H-bridge circuit (12) and the active clamp circuit (16) are IGBTs.

9. A switching module (1; 10) according to any preceding claim, wherein the energy storage device is a capacitor (C).

10. A switching module (10) according to any preceding claim, further comprising a power supply circuit (18) electrically connected between the first and second DC clamp terminals (DC3, DC4) in parallel with the energy storage device (C), the power supply circuit (18) being electrically connectable to one or more electronic circuits (20, 22) associated with the switching module (10).

11. A switching module (10) according to any preceding claim, further comprising a battery (24) electrically connected between the first and second DC clamp terminals (DC3, DC4) in parallel with the energy storage device (C).

12. A switching module (10) according to any preceding claim, further comprising a dynamic braking system (26) electrically connected between the first and second DC clamp terminals (DC3, DC4) in parallel with the energy storage device (C).

13. A direct current DC electrical machine (50) comprising:
a stator (52) with a plurality of stator coils (54₁, 54₂, ..., 54ₙ);
a rotor;
a DC current source (56); and
a power electronic switching assembly (58) comprising n switching modules (10₁, 10₂, ..., 10ₙ) according to any preceding claim, wherein n is an integer greater than or equal to two, wherein the first and second AC bridge terminals (AC1, AC2) of each switching module (10₁, 10₂, ..., 10ₙ) are electrically connected to at least one respective stator coil (54₁, 54₂, ..., 54ₙ), wherein the first DC bridge terminal (DC1) of a first switching module (10₁) is electrically connected to the DC current source (56), the second DC bridge terminal (DC2) of an nth switching module (10ₙ) is electrically connected to the DC current source (56), and the first and second DC bridge terminals (DC1, DC2) of the remaining switching modules are electrically connected in series.

14. A DC electrical machine (50) according to claim 13, wherein the DC current source (56) is a power converter, e.g., an AC/DC converter, or another DC electrical machine.

15. A power converter (70) comprising:
a transformer assembly (72) comprising a plurality of first coils (74₁, 74₂, ..., 74ₙ);
a DC current source (78); and
a power electronic switching assembly (80) comprising n switching modules (10₁, 10₂, ..., 10ₙ) according to any of claims 1 to 9, wherein n is an integer greater than or equal to two, wherein the first and second AC bridge terminals (AC1, AC2) of each switching module (10₁, 10₂, ..., 10ₙ) are electrically connected to a respective first coil (74₁, 74₂, ..., 74ₙ), wherein the first DC bridge terminal (DC1) of a first switching module (10₁) is electrically connected to the DC current source (78), the second DC bridge terminal (DC2) of an nth switching module (10ₙ) is electrically connected to the DC current source (78), and the first and second DC bridge terminals (DC1, DC2) of the remaining switching modules are electrically connected in series.
